(19) Europäisches Patentamt
European Patent Office
Office européen des brevets

(11) **EP 1 890 495 A2**

(12) **EUROPEAN PATENT APPLICATION**

(43) Date of publication:
**20.02.2008 Bulletin 2008/08**

(51) Int Cl.:
**H04N 7/26** *(2006.01)*     **H04N 7/50** *(2006.01)*

(21) Application number: **07016128.6**

(22) Date of filing: **16.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **18.08.2006 JP 2006222995**

(71) Applicant: **NEC Electronics Corporation Kawasaki, Kanagawa 211-8668 (JP)**

(72) Inventor: **Yokoyama, Yutaka Kawasaki Kanagawa 211-8668 (JP)**

(74) Representative: **Glawe, Delfs, Moll Patentanwälte Postfach 26 01 62 80058 München (DE)**

(54) **Bit-plane decoding device and bit-plane decoding method**

(57) A bit-plane decoding device decodes a coded bit-plane that is produced by encoding binary flag information of each macroblock in a picture partitioned into a plurality of macroblocks in a bit-plane and is contained in a picture header of compressed image data. In this device, a residual value bit-plane decoding unit performs decoding on the coded residual value bit-plane until obtaining a residual value bit-plane and outputs a decoding result as intermediate data. A storage unit stores the intermediate data. A bit-plane macroblock layer decoding unit performs differential reconstruction in a macroblock layer on the intermediate data stored in the storage unit to thereby obtain a bit-plane decoding result and outputs the bit-plane decoding result to a macroblock layer decoding unit.

Fig. 1

Printed by Jouve, 75001 PARIS (FR)

EP 1 890 495 A2

**Description**

BACKGROUND OF THE INVENTION

1. Field of the Invention

The present invention relates to a technique of decoding a coded bit-plane in compressed image data where the coded bit-plane, which is produced by encoding binary flag information of a macroblock in a bit-plane, is contained in a picture header.

2. Description of Related Art

With the development of digital technology, a digital audio and image playback device such as a DVD (Digital Versatile Disc) player has come into practice. The data that are treated in such a device are normally coded using video coding standards such as MPEG (Moving Picture Experts Group), H.264 and VC-1.

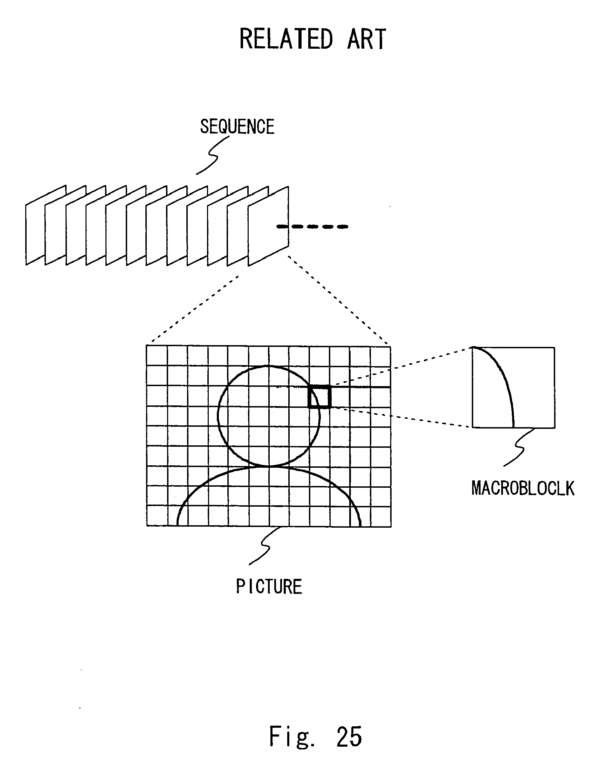

In the above coding standards, encoding is performed in a hierarchical fashion. Fig. 25 shows the concept of such a hierarchical structure. A series of moving images is called a sequence, and each image plane in the sequence is called a picture. One picture is further partitioned into macroblocks with a given size. Encoding is performed using layering corresponding thereto.

A specific coding standard is described hereinafter, with the VC-1 standard as an example (cf. Proposed SMPTE Standard for Television: VC-1 Compressed Video Bitstream Format and Decoding Process, August 23, 2005).

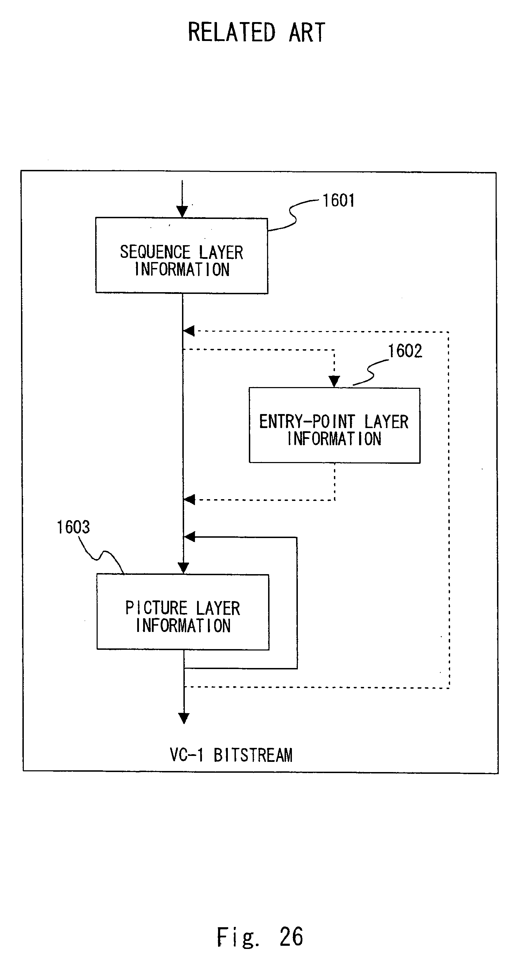

Fig. 26 shows a bitstream in the VC-1 standard. The bitstream includes sequence layer information 1601 that is generated by encoding sequence-level information in a sequence layer and picture layer information 1603 that is generated by encoding picture-level information in a picture layer. Further, entry-point layer information 1602 may be inserted at a boundary of several pictures according to need.

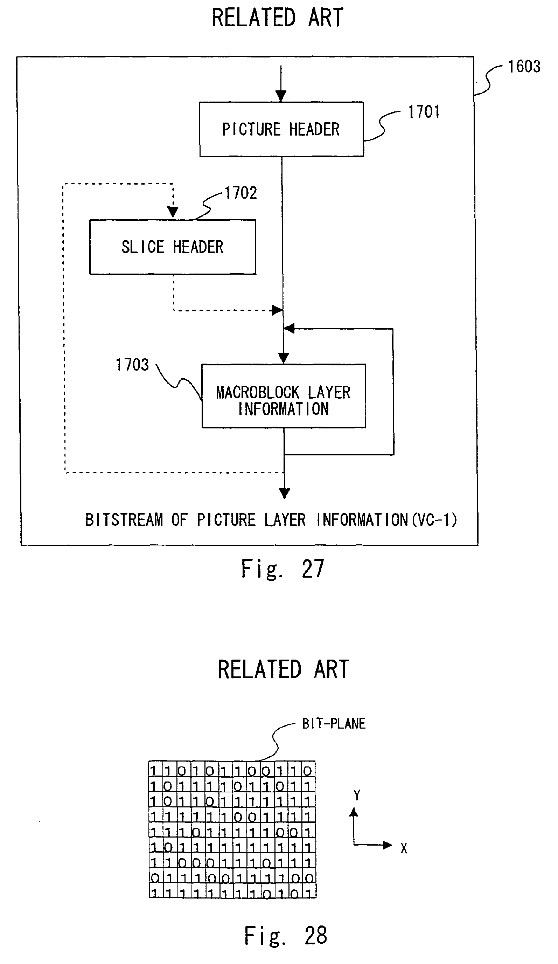

Fig. 27 shows a bitstream structure of the picture layer information 1603 in the bitstream of the VC-1 standard. The picture layer information 1603 includes a coded picture header 1701, a coded slice header 1702, and macroblock layer information 1703 that is generated by encoding information in macroblocks.

There is information that is included in the coded picture header 1701 rather than in the macroblock layer information 1703 in spite that it is part of macroblock information.

As described in Section 8.7, p.192 of the above "VC-1 Compressed Video Bitstream Format and Decoding Process", the VC-1 standard uses a bit-plane coding technique that encodes binary flag information of each macroblock on one image plane in the picture header. The binary flag information of a macroblock is 1-bit information such as an AC prediction flag and a skipped macroblock flag. A collection of such information in units of image planes, or pictures, is called a bit-plane. A plurality of kinds of bit-planes are defined for each of several coded elements of macroblocks. Fig. 28 shows an example. A bit-plane is two-dimensional binary image data which corresponds to a macroblock. If the number of macroblocks in the horizontal direction (the X-direction in Fig. 28) and the vertical direction (the Y-direction in Fig. 28) of one picture is 12 and 9, respectively, as shown in Fig. 28, a bit-plane is also 12x9 binary image data.

Although such a bit-plane represents information of macroblocks, it is encoded to be included in a picture header.

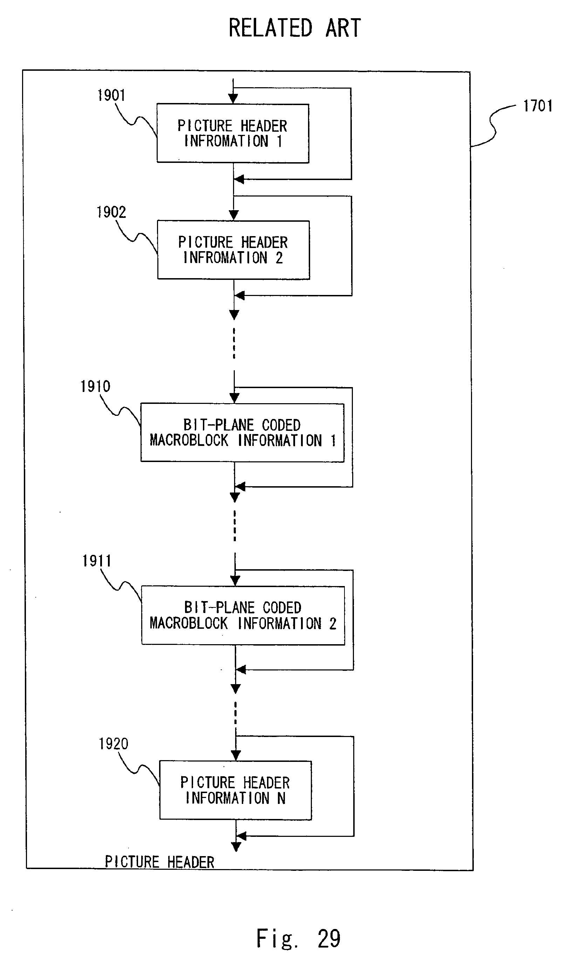

Fig. 29 shows the bitstream structure of the picture header 1701. As shown in Fig. 29, there are a plurality of pieces of information that are encoded in the picture header, including bit-plane coded macroblock information (e.g. bit-plane coded macroblock information 1910, which is also referred to herein as a coded bit-plane) . According to the conditions of encoding, there may be no bit-plane coded macroblock information or a plurality of bit-plane coded macroblock information in a picture header.

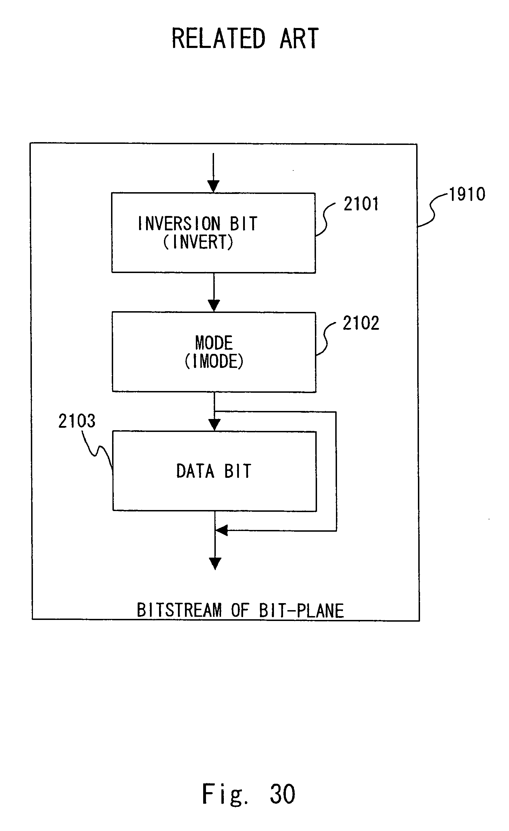

Fig. 30 shows a bitstream of the bit-plane coded macroblock information or coded bit-plane 1910. The coded bit-plane 1910 includes a 1-bit inversion bit (which is also referred to herein as INVERT) 2101, variable length coded mode information (also referred to as IMODE) 2102, and a data bit 2103. The IMODE 2102 indicates a coding mode, which is described later, and the data bit 2103 is encoded by the mode that is indicated by the IMODE 2102.

The bit-plane encoding according to the VC-1 standard is sorted into a plurality of methods that are indicated by different modes (cf . "VC-1 Compressed Video Bitstream Format and Decoding Process" described above) . These modes are: raw mode, normal-2 mode, diff-2 mode, normal-6 mode, diff-6mode, row-skip mode, and column-skip mode. Further, it is possible to perform encoding by specifying the value of the inversion bit 2101. The inversion bit 2101 is used as a default value when calculating a predicted value in the diff-2 mode and the diff-6 mode, and it is used as a value indicating whether or not to invert a decoding result in the other modes (excluding the raw mode).

In the raw mode, information contained in a bit-plane is individually encoded in a macroblock layer and not decoded in a picture header. In the other modes, a bit-plane is formed, and the encoding corresponding to each mode is performed.

In the row-skip mode, an image plane is partitioned into rows, and 1 bit is added to each row. If a value of this bit is 0, a value of the entire row becomes 0, and values in the other rows are encoded as they are.

In the column-skip mode, an image plane is partitioned into columns, and 1 bit is added to each column. If a value of this bit is 0, a value of the entire column becomes 0, and values in the other columns are encoded as they are.

In the normal-2 mode and the diff-2 mode, two macroblocks are treated as one set, and 2-bit information of each set is variable-length encoded. The main scanning direction and the sub scanning direction during encoding are the top-to-bottom direction and the left-to-right direction, respectively. Thus, the scanning is performed from the upper left corner toward the right on an image plane, and upon reaching the right end, it proceeds to the left end of the line immediately below. If the number of macroblocks in one picture is an odd number, the first one macroblock, which is the macroblock at the upper left corner, alone is encoded singly. In the diff-2 mode, differential encoding is performed, and a value that is coded in a bit-plane is a difference from a predicated value (which is referred to hereinafter as a residual value).

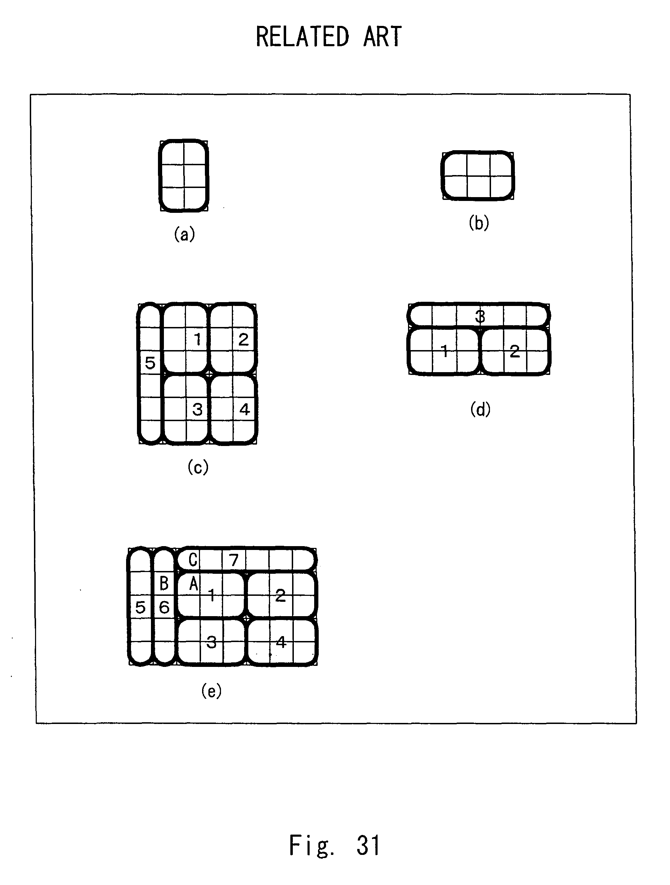

In the normal-6 mode and the diff-6 mode, six macroblocks are treated as one set, and 6-bit information of each set is variable-length encoded. One set of macroblocks is called a tile, and a rectangular tile with 6 elements is used in those two modes. A combination of macroblocks is determined according to a picture size. If the number of macroblocks in the main scanning direction (vertical direction) is a multiple of 3 and the number of macroblocks in the sub scanning direction (horizontal direction) is not a multiple of 3, a 2x3 vertical tile shown in (a) of Fig. 31 is used as a tile. Otherwise, a 3x2 horizontal tile shown in (b) of Fig. 31 is used as a tile. The tile partition begins with the lower right corner of a picture, and if the macroblocks left in the upper left part cannot take any pattern of (a) and (b) of Fig. 31, those macroblocks are used as a linear tile (1xN column linear tile or Nx1 row linear tile where N is a natural number). Encoding is performed firstly on the 2x3 vertical tiles or the 3x2 horizontal tiles from the upper left end, and then on the column linear tile and the row linear tile. The encoding method of the column linear tile is the same as that of the column-skip mode, and the encoding method of the row linear tile is the same as that of the row-skip mode. The differential encoding is performed also in the diff-6 mode, and a value that is coded in a bit-plane is a residual value.

In Fig. 31, (c), (d) and (e) show the patterns of tile partition when performing bit-plane encoding in those two modes. In these examples, the thin-line rectangles represent macroblocks, and the heavy-line rectangles represent tiles. In the pattern (c), a picture size is 5x6 macroblocks, and 2x3 vertical tiles are used in accordance with the above rule. The macroblocks in one left-end column are used as a column linear tile. In the pattern (d), a picture size is 6x3 macroblocks, and 3x2 horizontal tiles are used. The macroblocks in one upper-end row are used as a row linear tile. In the pattern (e), a picture size is 8x5 macroblocks, and 3x2 horizontal tiles are used. The macroblocks in two left-end columns are used as two column linear tiles, and the macroblocks in one upper-end row are used as one row linear tile. The numbers in the patterns (c), (d) and (e) of Fig. 31 indicate the order of encoding, and a tile with a smaller number is encoded earlier.

The structure and encoding of a bitstream according to the VC-1 standard are described above. Decoding of such a bitstream is described hereinbelow.

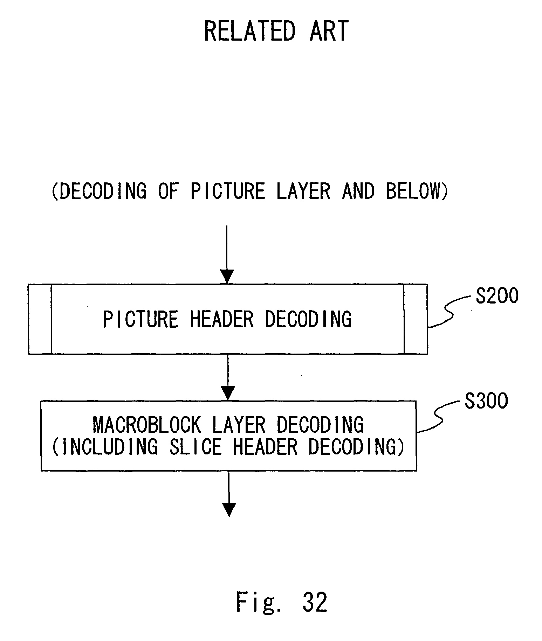

Fig. 32 is a flowchart showing a process of decoding a picture layer and below, which targets at a bitstream of the picture layer information 1603 shown in Fig. 27. As shown in Fig. 32, the process first performs decoding of the picture header 1701 (S200), and then performs decoding of the macroblock layer information 1703 (S300), in which each macroblock is decoded. In the VC-1 standard, it is arbitrary whether to add the slice header 1702 and, when it is added, decoding of the slice header 1702 is treated as the processing at the head of macroblocks. In Fig. 32, the slice header decoding is illustrated as a part of the macroblock layer decoding (S300).

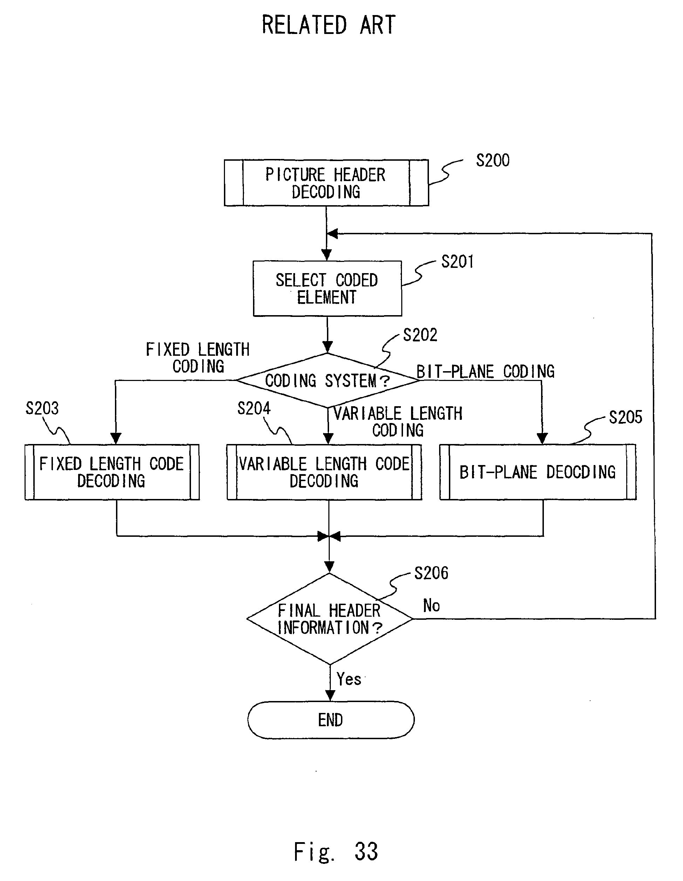

Fig. 33 shows a detail of the picture header decoding in Step S200.

As shown in Fig. 33, in the decoding of the picture header 1701, a coded element to be decoded is determined firstly (S201) . The coded information in the picture header 1701 have been encoded by one of the fixed length coding, the variable length coding and the bit-plane coding according to the specification. In Step S201, the coding system corresponding to the coded element is selected according to the specification, and decoding corresponding thereto is performed (S202 and S203 in the fixed length coding, S202 and S204 in the variable length coding, or S202 and S205 in the bit-plane coding). Such process is repeated subsequently, and the process ends upon decoding of final header information in the picture header 1701 (Yes in S206).

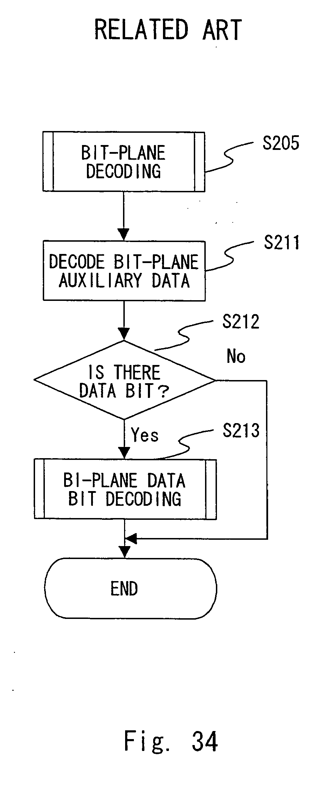

Fig. 34 is a flowchart showing the bit-plane decoding in the step S205 of Fig. 33. In the decoding of a bit-plane, bit-plane auxiliary data, which specifies a decoding method of a bit-plane, is decoded firstly (S211). In the VC-1 standard, the inversion bit 2101 and the IMODE 2102 are decoded in this step. Next, in Step S212, it is determined whether the data bit 2103 exists or not based on the decoded bit-plane auxiliary data. In the VC-1 standard, it is determined whether the mode is the raw mode or the other modes. If it is the raw mode, the data bit 2103 does not exist. In the other modes, the data bit 2103 exists. If there is the data bit 2103, the data bit 2103 is decoded (Yes in S212, S213) . If there is no data bit 2103, the process ends.

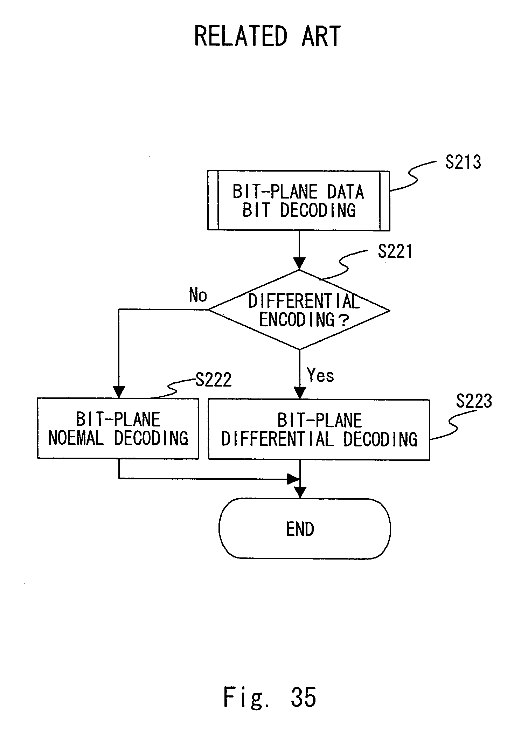

Fig. 35 shows a detail of the data-bit decoding in Step S213 of Fig. 34. As shown in Fig. 35, in the decoding of a data bit in a bit-plane, it is determined based on the decoded IMODE 2102 (S221) whether the coding system of the bit-plane is a differential coding system (the diff-2 mode or the diff-6 mode) with the use of differential coding or a normal coding system (the normal-2 mode, the normal-6 mode, the row-skip mode, the column-skip mode) without the use of differential coding. If the normal coding system is used, bit-plane normal decoding is performed (No in S221, S222) . If the differential coding system is used, bit-plane differential decoding is performed (Yes in S221, S223) .

As described above, the differential encoding is performed in the diff-2 mode and the diff-6 mode, and a value that is coded in a bit-plane is a residual value indicating a difference from a predicted value. A bit-plane composed of residual values is refereed to herein as a residual value bit-plane.

Decoding of a bit-plane that is encoded in those two modes is bit-plane differential decoding (S223). Specifically, the bit-plane differential decoding step decodes a residual value bit-plane (to be precise, a coded residual value bit-plane) to obtain each residual value r, and then adds a predicted value p to the residual value r to obtain a final decoding result b (which is referred to hereinafter as a bit-plane decoding result) as shown in the following expression 1. For convenience of description, the decoding to be performed until obtaining a residual value r and the process to obtain a bit-plane decoding result b with the use of the residual value r are referred to herein as residual value bit-plane decoding and differential reconstruction, respectively.

$$b(i,j) = r(i,j) \oplus p(i,j) \qquad (1)$$

(i ,j) : POSITION
b(i,j): DECODING RESULT
p: PREDICTED RESULT
r: RESIDUAL RESULT
$\oplus$: EXCLUSIVE-OR OPERATION

A predicted value p in the above Expression 1 is given by the following expression.

$$p(i,j) = \begin{cases} \text{INVERT} & (\text{if } (i,j)=(0,0) \text{ or } b(i,j-1) \neq b(i-1,j)) \\ b(i,j-1) & (\text{if } i=0 \text{ and } j \neq 0) \\ b(i-1,j) & (\text{other cases}) \end{cases} \qquad (2)$$

(i,j): POSITION
b(i,j): DECODING RESULT
b(i-1,j): PREDICTED VALUE

As shown in Expression 2, when obtaining a predicted value p (i, j) of a macroblock (i, j), a bit-plane decoding result (b(i-1, j), b(i, j-1)) of macroblocks that are located above and to the left of the target macroblock is referred to unless it is not a macroblock at an upper left corner and in a left end column. Accordingly, bit-plane decoding results b of those macroblocks should be obtained in advance. Because a linear tile is encoded in the last place in the diff-6 mode as described earlier, the differential reconstruction cannot be performed until the residual value bit-plane decoding of a whole picture is finished in some cases.

For example, referring to a macroblock (macroblock A) at the upper end corner of the tile 1 in the pattern (e) of Fig. 31, a macroblock (macroblock B) on the left side of the macroblock A is included in the tile 6, and a macroblock (macroblock C) on the upper side of the macroblock A is included in the tile 7. In order to obtain a predicted value p of the macroblock A, bit-plane decoding results b of the macroblock B and the macroblock C are needed as shown in Expression 2. In order to obtain the bit-plane decoding results b of the macroblock B and the macroblock C, residual values r of those macroblocks are needed as shown in Expression 1; therefore, the residual value bit-plane decoding of the tile 6 and the tile 7 should be finished.

Because the residual value bit-plane decoding is performed sequentially in the order of encoding the tiles, the residual value bit-plane decoding is carried out in the tile 6 and the tile 7 after it is carried out in the tile 1. Accordingly, the differential reconstruction of the macroblock A cannot be performed until the residual value bit-plane decoding of the tile 6 and the tile 7 is finished.

As described above, in the diff-6 mode using differential encoding, the differential reconstruction cannot be performed until the residual value bit-plane decoding of a whole picture is completed.

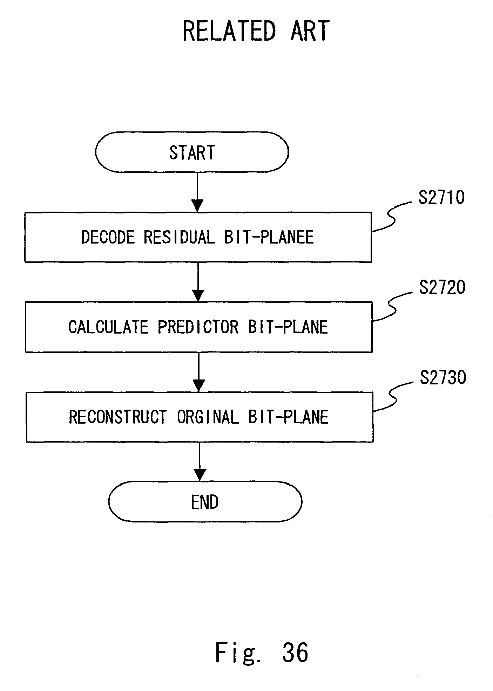

Japanese Patent Translation Publication No. 2005-513883 discloses a technique of decoding a bit-plane that is produced by differential encoding such as the diff-6 mode. This technique reconstructs a bit-plane for each picture. As shown in the flowchart of Fig. 36 (Fig. 27 in Japanese Patent Translation Publication No. 2005-513883), the technique first decodes a residual value bit-plane in Step S2710. This processing corresponds to the above-described residual value bit-plane decoding, thus generating a residual value r of a bit-plane for one picture. Next, the technique calculates a predictor bit-plane in Step S2720. This processing is performed according to the above-mentioned Expression 2, thus generating a predicted value p of the bit-plane for one picture. After that, the technique performs the differential reconstruction according to Expression 1 with the use of the residual value r and the predicted value p that are obtained in the above two steps, thereby reconstructing a bit-plane (S2730).

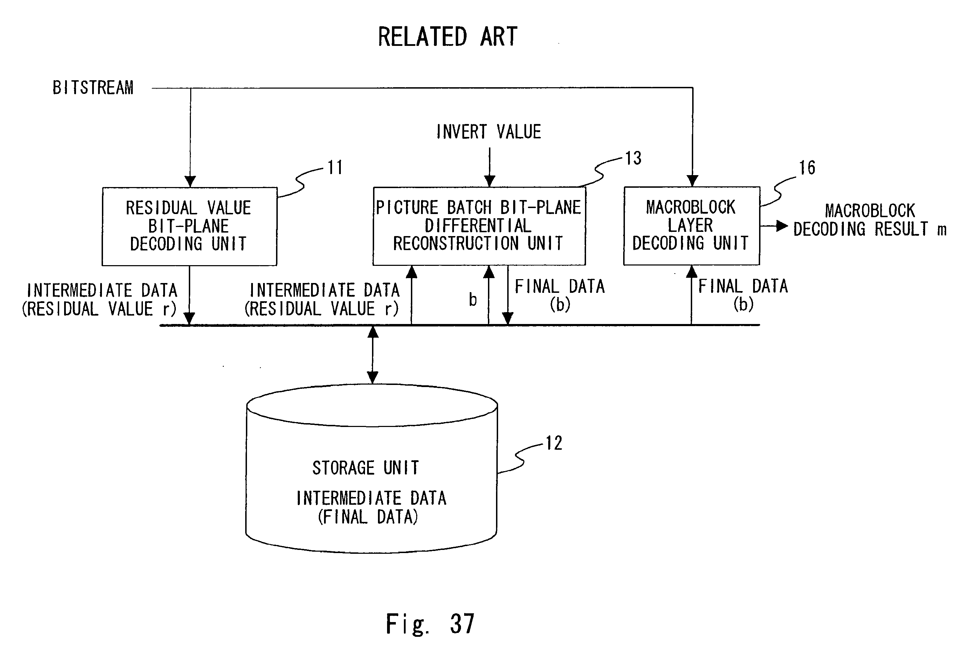

A device to implement the technique disclosed in Japanese Patent Translation Publication No. 2005-513883 may have the structure shown in Fig. 37. The device with the structure of Fig. 37 carries out the decoding of a picture layer and below (the picture header decoding and the macroblock layer decoding shown in Fig. 32) . In this structure, bit-plane decoding in the picture header decoding (Step S205 in Fig. 33) is specialized in the bit-plane differential decoding. The structure for carrying out the processing other than the bit-plane decoding in the picture header decoding, i.e. fixed length decoding and variable length decoding, is not illustrated.

The device includes a residual value bit-plane decoding unit 11, a storage unit 12, a picture batch bit-plane differential reconstruction unit 13, and a macroblock layer decoding unit 16. The residual value bit-plane decoding unit 11 performs the processing of Step S2710 in Fig. 36, which is residual value bit-plane decoding, to obtain a residual value r for one picture and writes it as intermediate data into the storage unit 12.

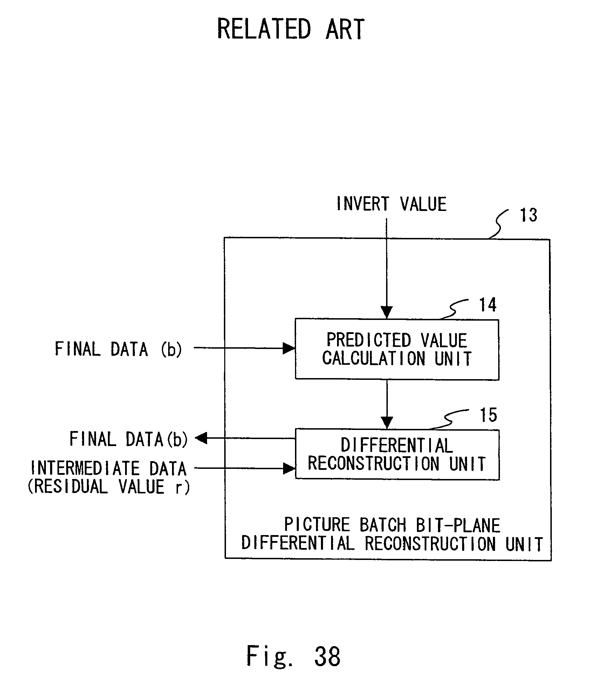

The picture batch bit-plane differential reconstruction unit 13 performs two processing, i.e. calculation of a predicted value p and differential reconstruction, to obtain a bit-plane decoding result b. As shown in Fig. 38, the picture batch bit-plane differential reconstruction unit 13 includes a predicted value calculation unit 14 and a differential reconstruction unit 15. The predicted value calculation unit 14 calculates an INVERT value as a predicted value p (0, 0) of a macroblock at the upper left corner of the picture. Then, the differential reconstruction unit 15 calculates a bit-plane decoding result b (0, 0) of the macroblock at the upper left corner according to Expression 1. The bit-plane decoding result b(0, 0) is written to an area that is allocated to store bit-plane decoding results b within the storage unit 12. After that, the predicted value calculation unit 14 and the differential reconstruction unit 15 repeat the processing represented by Expressions 1 and 2, thereby obtaining bit-plane decoding results b of macroblocks in one picture.

The bit-plane decoding results b for one picture are thereby obtained and stored in the storage unit 12.

The macroblock layer decoding unit 16 performs macroblock layer decoding by reference to the bit-plane decoding result b that is obtained by picture batch bit-plane differential reconstruction unit 13 and stored in the storage unit 12, thereby obtaining a decoding result m. To avoid confusion with a bit-plane decoding result b, a decoding result m that is obtained by the macroblock layer decoding is referred to herein as a macroblock decoding result m.

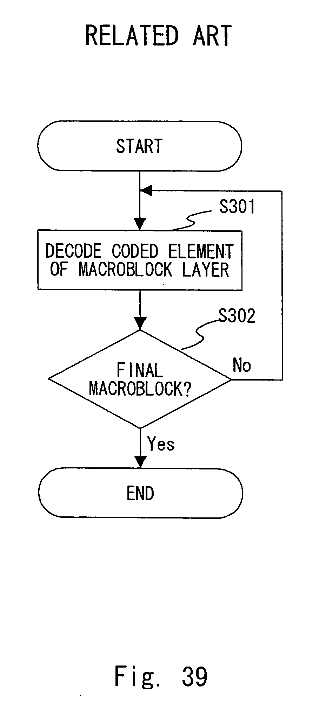

Fig. 39 is a flowchart showing the processing performed in the macroblock layer decoding unit 16. The processing corresponds to Step S300 in Fig. 32. As shown in Fig. 39, the macroblock layer decoding unit 16 performs decoding of a macroblock layer on all macroblocks by reference to the bit-plane decoding result b stored in the storage unit 12 (S301, Yes in S302) .

Because the coded bit-plane 1910 is contained in the picture header 1701 as described earlier, it is easy to perform the decoding of the coded bit-plane 1910 in a picture layer, which is, in units of pictures, just like the other information (such as picture header information 1) that are contained in the picture header 1701.

In the diff-6 mode, differential reconstruction cannot be performed until the residual value bit-plane decoding of a whole picture is finished in some cases; therefore, it is necessary to perform the residual value bit-plane decoding in a picture layer. Consider the case where the picture batch bit-plane differential reconstruction unit 13 performs the processing until obtaining a bit-plane decoding result b in units of pictures after the residual value bit-plane decoding is performed. In such a case, because the bit-plane decoding result b is treated in units of pictures, it is necessary for the picture batch bit-plane differential reconstruction unit 13 to perform reading of a bit-plane decoding result b of one picture (in the position where a bit-plane decoding result b is not yet obtained, a default value or a flag indicating no bit-plane decoding result b obtained yet, for example, is stored) and write-back of a result obtained by adding a newly obtained bit-plane decoding result b into the storage unit 12 every time it performs the processing to calculate a bit-plane decoding result b.

SUMMARY

In such a structure, a data transmission amount between the picture batch bit-plane differential reconstruction unit 13 and the storage unit 12 is large, thus requiring a large access bandwidth from the picture batch bit-plane differential reconstruction unit 13 to the storage unit 12.

In one embodiment, the present invention provides a bit-plane decoding device. The device decodes a coded bit-plane on compressed image data in which the coded bit-plane that is produced by encoding binary flag information of each macroblock in a picture partitioned into a plurality of macroblocks in a bit-plane is contained in a picture header. The device includes a residual value bit-plane decoding unit, an intermediate data storage unit, and a bit-plane macroblock layer decoding unit.

The residual value bit-plane decoding unit performs processing in a picture layer. The residual value bit-plane decoding unit performs decoding on a coded residual value bit-plane which is produced by differential encoding that produces a residual value bit-plane based on a predicted value for a bit-plane and encodes the residual value bit-plane using a given coding system until obtaining a residual value bit-plane and then outputs a decoding result as intermediate data.

The intermediate data storage unit stores the intermediate data from the residual value bit-plane decoding unit.

The bit-plane macroblock layer decoding unit performs processing in a macroblock layer. The bit-plane macroblock layer decoding unit performs differential reconstruction on the intermediate data to become a residual value bit-plane, which is stored in the intermediate data storage unit, and outputs final data.

In another embodiment, the present invention provides a bit-plane decoding method. The method performs decoding on a coded residual value bit-plane until obtaining a residual value bit-plane in a picture layer, and performs differential reconstruction on a residual value of each macroblock contained in the residual value bit-plane in a macroblock layer.

Performing processing in a picture layer means performing processing in units of pictures, and performing processing in a macroblock layer means performing processing in units of macroblocks.

Substitution of the above method and device by a system and a program is also effective as other embodiments of the present invention.

A bit-plane decoding technique of the present invention enables reduction of a data transmission amount during decoding.

BRIEF DESCRIPTION OF THE DRAWINGS

The above and other objects, advantages and features of the present invention will be more apparent from the following description of certain preferred embodiments taken in conjunction with the accompanying drawings, in which:

Fig. 1 is a block diagram showing the structure of a data processing device to which a first decoding technique of the present invention is applied;

Fig. 2 is a block diagram showing the structure of a bit-plane macroblock layer decoding unit in the data processing device of Fig. 1;

Fig. 3 is a flowchart showing the process flow in the data processing device of Fig. 1;

Fig. 4 is a block diagram showing the structure of another data processing device to which the first decoding technique of the present invention is applied;

Fig. 5 is a block diagram showing the structure of a data processing device to which a second decoding technique of the present invention is applied;

Fig. 6 is a block diagram showing the structure of a bit-plane picture layer decoding unit in the data processing device of Fig. 5;

Fig. 7 is a block diagram showing the structure of a bit-plane macroblock layer decoding unit in the data processing device of Fig. 5;

Fig. 8 is a flowchart showing the process flow in the data processing device of Fig. 5;

Fig. 9 is a block diagram showing the structure of another bit-plane macroblock layer decoding unit that is applicable to the data processing device of Fig. 5;

Fig. 10 is a block diagram showing the structure of a data processing device to which a third decoding technique of the present invention is applied;

Fig. 11 is a block diagram showing the structure of a bit-plane picture layer decoding unit in the data processing device of Fig. 10;

Fig. 12 is a block diagram showing the structure of a bit-plane macroblock layer decoding unit in the data processing device of Fig. 10;

Fig. 13 is a flowchart showing the process flow in the data processing device of Fig. 10;

Fig. 14 is a block diagram showing the structure of another bit-plane picture layer decoding unit that is applicable to the data processing device of Fig. 10;

Fig. 15 is a block diagram showing the structure of a VC-1 decoding device according to a first embodiment of the present invention;

Fig. 16 is a block diagram showing a bit-plane picture layer decoding unit in the VC-1 decoding device of Fig. 15;

Fig. 17 is a block diagram showing a bit-plane macroblock layer decoding unit in the VC-1 decoding device of Fig. 15;

Fig. 18 is a view showing the sequence of scanning macroblocks;

Fig. 19 is a view to describe the position of data that is referred to in calculating a predicted value;

Fig. 20 is a flowchart showing the process flow in the VC-1 decoding device of Fig. 15;

Fig. 21 is a block diagram showing the structure of a VC-1 decoding device according to a second embodiment of the present invention;

Fig. 22 is a block diagram showing the structure of a bit-plane picture layer decoding unit in the VC-1 decoding device of Fig. 21;

Fig. 23 is a block diagram showing the structure of a bit-plane macroblock layer decoding unit in the VC-1 decoding device of Fig. 21;

Fig. 24 is a flowchart showing the process flow in the VC-1 decoding device of Fig. 21;

Fig. 25 is a view to describe a typical hierarchical structure in video coding;

Fig. 26 is a view showing the structure of a bitstream in the VC-1 standard;

Fig. 27 is a view showing the structure of a picture layer of a bitstream in the VC-1 standard;

Fig. 28 is a view showing an example of a bit-plane;

Fig. 29 is a view showing the structure of a picture header of a bitstream in the VC-1 standard;

Fig. 30 is a view showing the structure of a coded bit-plane in the VC-1 standard;

Fig. 31 is a view to describe a coding technique in the VC-1 standard;

Fig. 32 is a flowchart showing a process of decoding a picture layer and below;

Fig. 33 is a flowchart showing a process of decoding a picture header;

Fig. 34 is a flowchart showing a process of decoding a bit-plane;

Fig. 35 is a flowchart showing a process of decoding a data bit of a bit-plane;

Fig. 36 is a flowchart showing a process of decoding a differential coded bit-plane according to a related art;

Fig. 37 is a view showing a data processing device used to describe a drawback in decoding a bit-plane;

Fig. 38 is a view showing a picture batch bit-plane differential reconstruction unit in the data processing device of Fig. 37; and

Fig. 39 is a flowchart showing the processing in a macroblock layer decoding unit in the data processing device of Fig. 37.

## DETAILED DESCRIPTION OF THE PREFERRED EMBODIMENTS

Before describing the preferred embodiments in detail, principles of the invention will be explained in order to facilitate the understanding of the present invention.

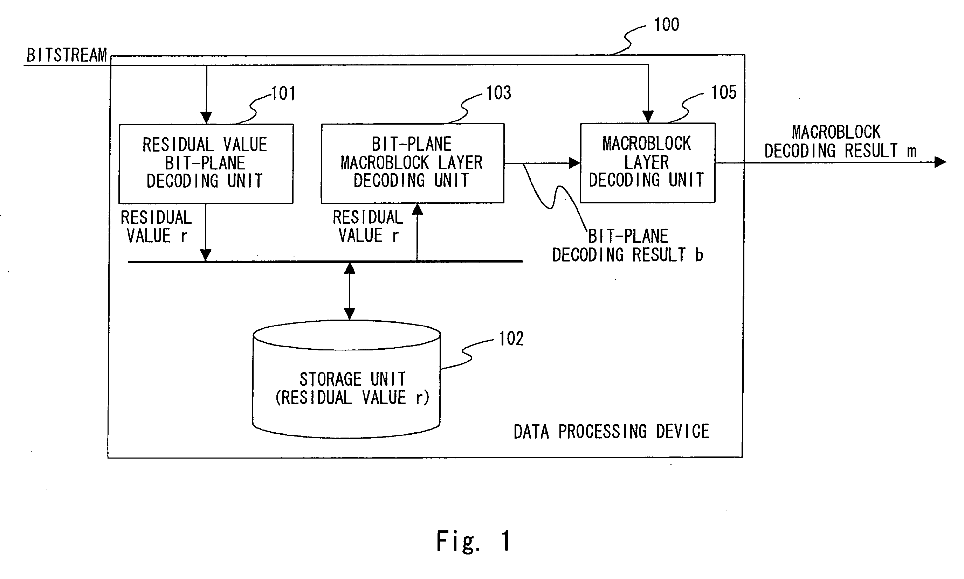

Fig. 1 shows the structure of a data processing device 100 according to a first technique of the present invention. The data processing device 100 partitions a picture into a plurality of macroblocks, decodes a coded bit-plane that is produced by encoding binary flag information of each macroblock in a bit-plane and further decodes a macroblock layer. The coded bit-plane is contained in a picture header, and it is a coded residual value bit-plane that is produced by differential encoding.

Referring to Fig. 1, the data processing device 100 includes a residual value bit-plane decoding unit 101, a storage unit 102, a bit-plane macroblock layer decoding unit 103, and a macroblock layer decoding unit 105. A bitstream of a residual value bit-plane is input to the data processing device 100.

The residual value bit-plane decoding unit 101 performs decoding on an input bitstream until obtaining a residual value bit-plane, and outputs a decoding result as intermediate data to the storage unit 102. The residual value bit-plane decoding unit 101 performs the decoding in a picture layer, so that a residual value bit-plane composed of residual values r in one picture is written to the storage unit 102.

A residual value bit-plane corresponds to intermediate data, and the storage unit 102 serves as an intermediate data storage unit.

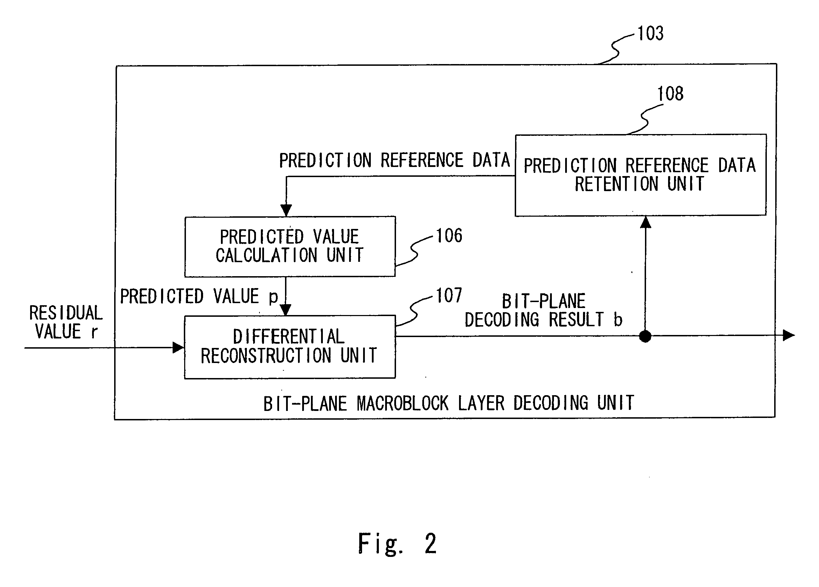

The bit-plane macroblock layer decoding unit 103 carries out processing in a macroblock layer, and it reads the residual value r stored in the storage unit 102 for each macroblock and performs differential reconstruction thereon. Fig. 2 shows the structure of the bit-plane macroblock layer decoding unit 103.

The bit-plane macroblock layer decoding unit 103 includes a predicted value calculation unit 106, a differential reconstruction unit 107, and a prediction reference data retention unit 108.

As described earlier, a coded residual value bit-plane that is composed of residual values r of one picture is produced by differential encoding that generates a residual value bit-plane based on a predicted value for a bit-plane and encodes the residual value bit-plane with a given coding system.

The differential reconstruction unit 107 reads a residual value r of one macroblock each from the storage unit 102 and adds a predicted value p calculated by the predicted value calculation unit 106 thereto to thereby obtain a bit-plane decoding result b of the macroblock. The differential reconstruction unit 107 outputs the bit-plane decoding result b to the prediction reference data retention unit 108 and the macroblock layer decoding unit 105.

The prediction reference data retention unit 108 stores prediction reference data to be used for calculation of a predicted value p. The prediction reference data varies by coding system used in differential encoding. According to the position of a macroblock corresponding to a residual value r, it may be a default value or a bit-plane decoding result b of a macroblock in a different position. In the calculation of a bit-plane decoding result b in a certain position, when referring to a bit-plane decoding result b of a macroblock for which the bit-plane decoding result b is obtained already because it is processed prior to that certain position, the prediction reference data retention unit 108 retains a bit-plane decoding result b that is output from the differential reconstruction unit 107 for a prescribed period of time that is required to obtain a predicted value p of a macroblock to be processed after the macroblock having the bit-plane decoding result b.

The predicted value calculation unit 106 calculates a predicted value p in the corresponding position with the use of the reference data stored in the prediction reference data retention unit 108 and supplies the predicted value p to the differential reconstruction unit 107.

The bit-plane decoding result b that is obtained by the differential reconstruction unit 107 is sequentially supplied to the macroblock layer decoding unit 105. Using the bit-plane decoding result b, the macroblock layer decoding unit 105 decodes a macroblock layer to thereby obtain a macroblock decoding result m.

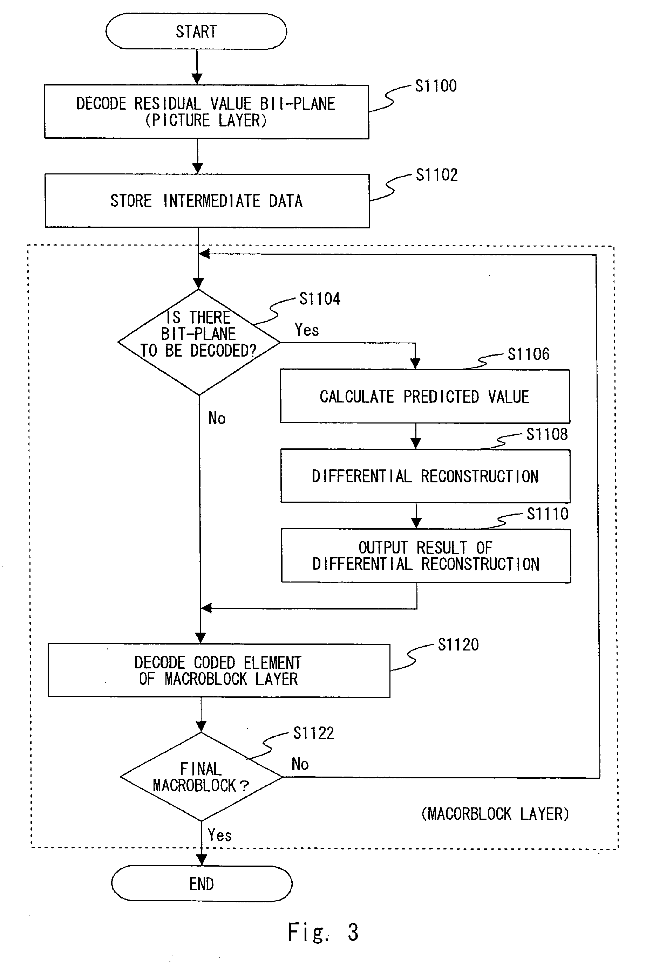

Fig. 3 is a flowchart showing the process flow in the data processing device 100. Firstly, the residual value bit-plane decoding unit 101 performs decoding of a coded residual value bit-plane, thereby obtain a residual value bit-plane composed of residual vales r of one picture (S1100). The residual value bit-plane is stored as intermediate data into the storage unit 102 (S1102). Those steps are performed in units of pictures.

Steps S1104 to S1122 of Fig. 3, which are surrounded by a dotted line, is performed in units of macroblocks. In Step S1104, the bit-plane macroblock layer decoding unit 103 checks if there is a bit-plane to be decoded in a target macroblock. It checks whether binary flag information of a target macroblock is bit-plane coded in a picture header and not completely decoded yet, that is, a bit-plane decoding result b is not obtained yet. If there is a bit-plane to be decoded (Yes in S1104), the predicted value calculation unit 106 calculates a predicted value p (S1106). Then, the differential reconstruction unit 107 adds a residual value r of the macroblock that is read from the storage unit 102 to the predicted value p, thereby obtaining a bit-plane decoding result b (S1108). The bit-plane decoding result b is output to the prediction reference data retention unit 108 and the macroblock layer decoding unit 105 (S1110).

If there are a plurality of bit-planes to be decoded in a target macroblock, the processing of S1106 to S1110 is performed on each of bit-planes.

The bit-plane decoding result b that is output to the prediction reference data retention unit 108 is retained for a necessary period of time as prediction reference data for reference to a predicted value p of a macroblock to be processed after this macroblock.

The bit-plane decoding result b that is output from the bit-plane macroblock layer decoding unit 103 to the macroblock layer decoding unit 105 is used for decoding of a coded element of a corresponding macroblock (S1120).

If there is no bit-plane to be decoded in Step S1104 (No in S1104), the macroblock layer decoding unit 105 decodes a coded element which is not bit-plane coded (S1120).

When the processing from Step S1104 to S1120 is performed on all macroblocks in one picture (Yes in S1122), the processing in this picture ends.

According to the first technique, in the process of decoding a differential-coded bit-plane that is contained in a picture header, it first performs decoding to obtain a residual value bit-plane in a picture layer and then performs differential reconstruction in a macroblock layer. Thus, when performing differential reconstruction on one macroblock, it requires only one-time access to an intermediate data storage unit that stores a residual value bit-plane as intermediate data, and the amount of data to be read at a time is small. It is thereby possible to reduce the data transmission amount in decoding a bit-plane, thus decreasing an access bandwidth between a differential reconstruction unit and an intermediate data storage unit.

Further, because differential reconstruction is performed in a macroblock layer, the bit-plane macroblock layer decoding unit 103 can output a bit-plane decoding result b directly to the macroblock layer decoding unit 105. It is thereby possible to eliminate a step of writing back a bit-plane decoding result b to an intermediate data storage unit and a step of reading a bit-plane decoding result b by the macroblock layer decoding unit 105, thus improving the efficiency.

Although a default value that is used by the predicted value calculation unit 106 of the bit-plane macroblock layer decoding unit 103 is retained in the prediction reference data retention unit 108 in the data processing device 100 shown in Fig. 1, the default value may be retained in the predicted value calculation unit 106. Further, if a default value is bit-plane decoded in a picture header as auxiliary data together with other flag information, the auxiliary data may be decoded at the same time as decoding in the residual value bit-plane decoding unit 101 and supplied to the predicted value calculation unit 106.

As described above, the differential encoding generates a residual value bit-plane based on a predicted value for a bit-plane and encodes the residual value bit-plane with a given coding system. There are various coding systems for encoding a residual value bit-plane for the same differential encoding. The first technique of the present invention may be applied to a system which needs to be compatible with coded residual value bit-planes that are produced by a plurality of, e.g., two, different coding systems. This enables reduction of a data transmission amount and a hardware scale.

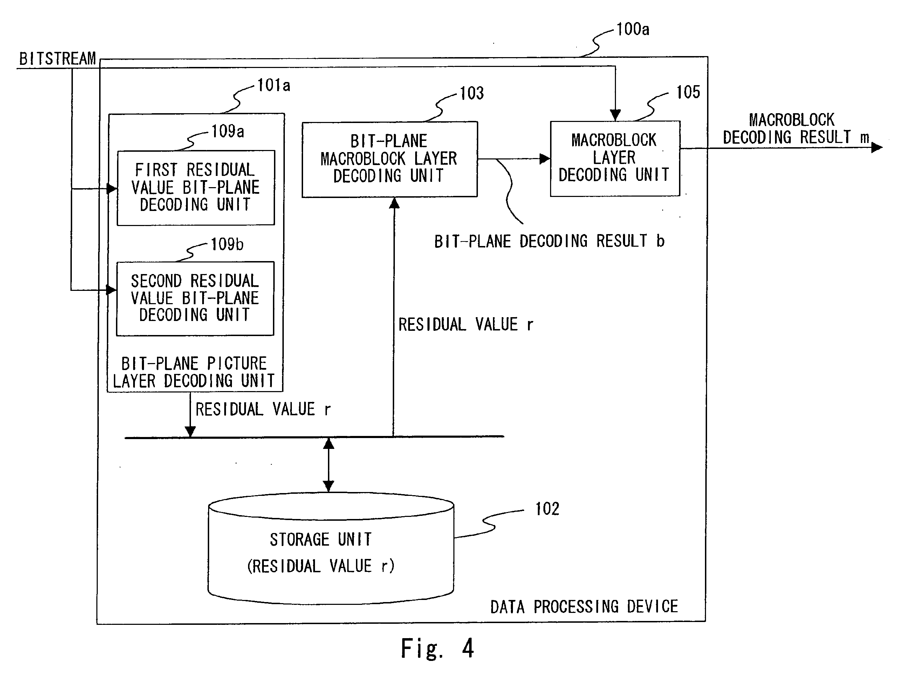

Fig. 4 shows the structure of a data processing device 100a, which is used instead of the data processing device 100 shown in Fig. 1 in the case of processing such two kinds of residual value bit-planes, for example. The structure of the data processing device 100a is the same as that of the data processing device 100 except that it uses a bit-plane picture layer decoding unit 101a rather than the residual value bit-plane decoding unit 101. Thus, only the bit-plane picture layer decoding unit 101a is described hereinafter.

Referring to Fig. 4, the bit-plane picture layer decoding unit 101a includes a first residual value bit-plane decoding unit 109a and a second residual value bit-plane decoding unit 109b. These units respectively correspond to different coding systems and perform decoding on a residual value bit-plane that is encoded by a corresponding coding system until obtaining a residual value bit-plane.

Although a process of obtaining residual value bit-planes for coded residual value bit-planes that are produced by a plurality of different coding systems is different, a process of differential reconstruction is the same. Therefore, in such a structure, it is possible to use the same processing unit that performs differential reconstruction in a macroblock layer for differential-coded bit-planes that are encoded by different coding systems. This enables reduction of a circuit size.

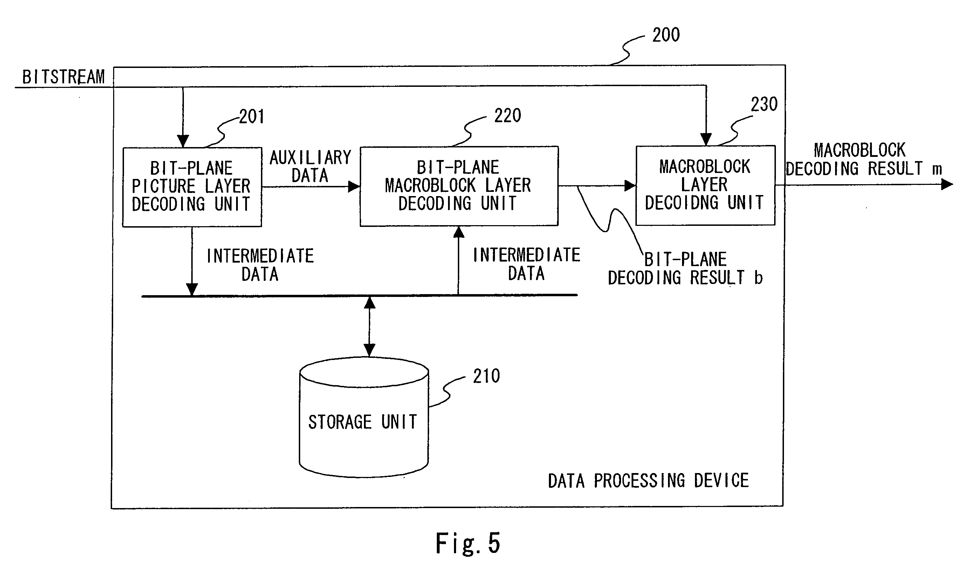

Fig. 5 shows the structure of a data processing device 200 according to a second technique of the present invention. The data processing device 200 partitions a picture into a plurality of macroblocks, decodes a coded bit-plane that is produced by encoding binary flag information of each macroblock in a bit-plane and further decodes a macroblock layer. The coded bit-plane is contained in a picture header, and it is either one of a coded residual value bit-plane that is produced by differential encoding or a non-differential coded bit-plane that is produced by non-differential encoding. The data processing device 200 is capable of processing these two kinds of coded bit-planes. The coded bit-plane contains auxiliary data that indicates whether the coded bit-plane is encoded by differential encoding or non-differential encoding.

Referring to Fig. 5, the data processing device 200 includes a bit-plane picture layer decoding unit 201, a storage unit 210, a bit-plane macroblock layer decoding unit 220, and a macroblock layer decoding unit 230. A bit-stream, which is either a coded residual value bit-plane or a non-differential coded bit-plane, is input to the data processing device 200.

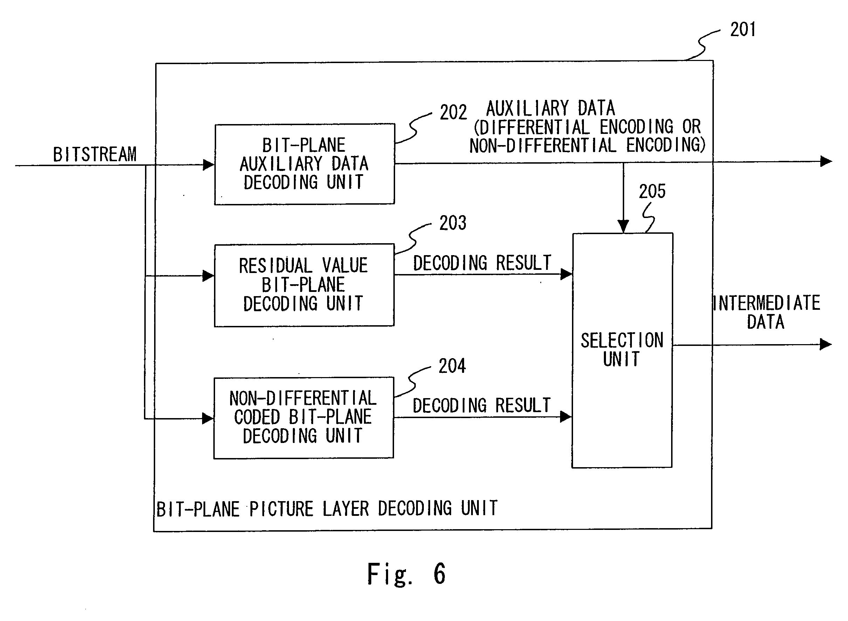

Fig. 6 shows the structure of the bit-plane picture layer decoding unit 201. The bit-plane picture layer decoding unit 201 performs processing in a picture layer. The bit-plane picture layer decoding unit 201 includes a bit-plane auxiliary data decoding unit 202, a residual value bit-plane decoding unit 203, a non-differential coded bit-plane decoding unit 204, and a selection unit 205.

The bit-plane auxiliary data decoding unit 202 decodes auxiliary data of an input bitstream and supplies the result to the selection unit 205 and the bit-plane macroblock layer decoding unit 220. The auxiliary data indicates whether an input coded bit-plane is encoded by differential encoding or non-differential encoding.

The residual value bit-plane decoding unit 203 and the non-differential coded bit-plane decoding unit 204 decode a coded bit-plane and output a decoding result to the selection unit 205. The residual value bit-plane decoding unit 203 is the same as the residual value bit-plane decoding unit 101 shown in Fig. 1 and thus not described in detail herein. A decoding result that is obtained by the residual value bit-plane decoding unit 203 when a coded bit-plane is a residual value bit-plane is a residual value bit-plane. On the other hand, a decoding result that is obtained by the non-differential coded bit-plane decoding unit 204 when a coded bit-plane is a non-differential coded bit-plane is a bit-plane.

The selection unit 205 selects either one output from the residual value bit-plane decoding unit 203 and the non-differential coded bit-plane decoding unit 204 as intermediate data based on the auxiliary data, and outputs the selected one to the storage unit 210, which serves as an intermediate data storage unit. Specifically, if the auxiliary data indicates that a coded bit-plane is encoded by differential encoding, the selection unit 205 selects and outputs a decoding result of the residual value bit-plane decoding unit 203. If, on the other hand, the auxiliary data indicates that a coded bit-plane is encoded by non-differential encoding, the selection unit 205 selects and outputs a decoding result of the non-differential coded bit-plane decoding unit 204.

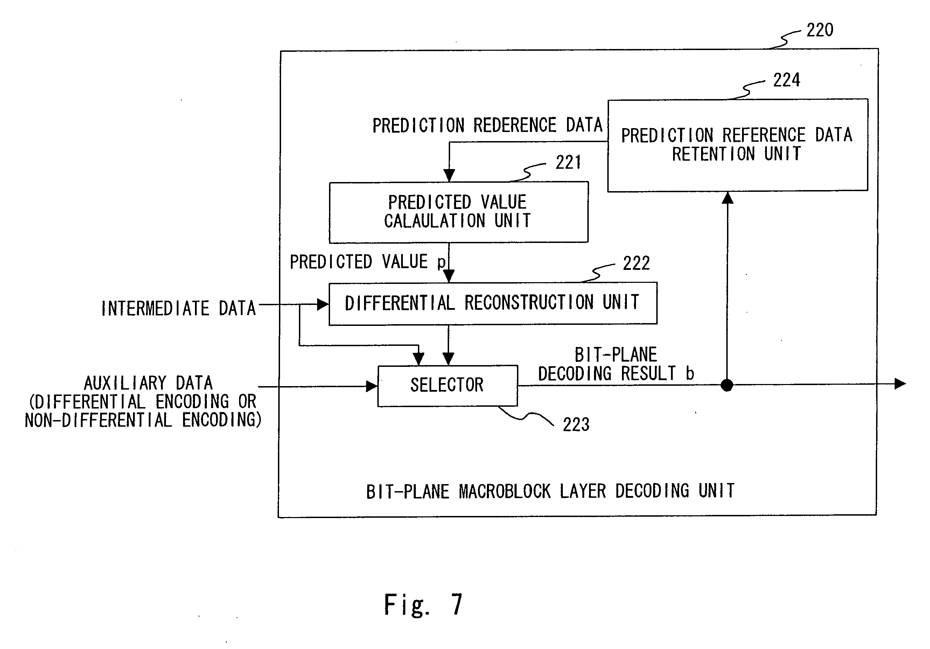

Fig. 7 shows the structure of the bit-plane macroblock layer decoding unit 220. The bit-plane macroblock layer decoding unit 220 performs processing in a macroblock layer. The bit-plane macroblock layer decoding unit 220 includes a predicted value calculation unit 221, a differential reconstruction unit 222, a selector 223, and a prediction reference data retention unit 224. The predicted value calculation unit 221 and the differential reconstruction unit 222 are the same as the corresponding elements in the bit-plane macroblock layer decoding unit 103 shown in Fig. 1 and thus not described in detail herein.

A processing result of the differential reconstruction unit 222 is input to the selector 223. The selector 223 also receives intermediate data of a target macroblock out of the intermediate data that are stored in the storage unit 210, and auxiliary data. If the auxiliary data indicates differential encoding, the selector 223 outputs the output from the differential reconstruction unit 222 as a bit-plane decoding result b. If the auxiliary data indicates non-differential encoding, the selector 223 outputs the intermediate data as it is as a bit-plane decoding result b. The bit-plane decoding result b is also supplied to the prediction reference data retention unit 224.

The macroblock layer decoding unit 230 decodes a macroblock layer with the use of the bit-plane decoding result b that is output from the bit-plane macroblock layer decoding unit 220. This processing is the same as the processing in the macroblock layer decoding unit 105 shown in Fig. 1 and thus not described in detail herein.

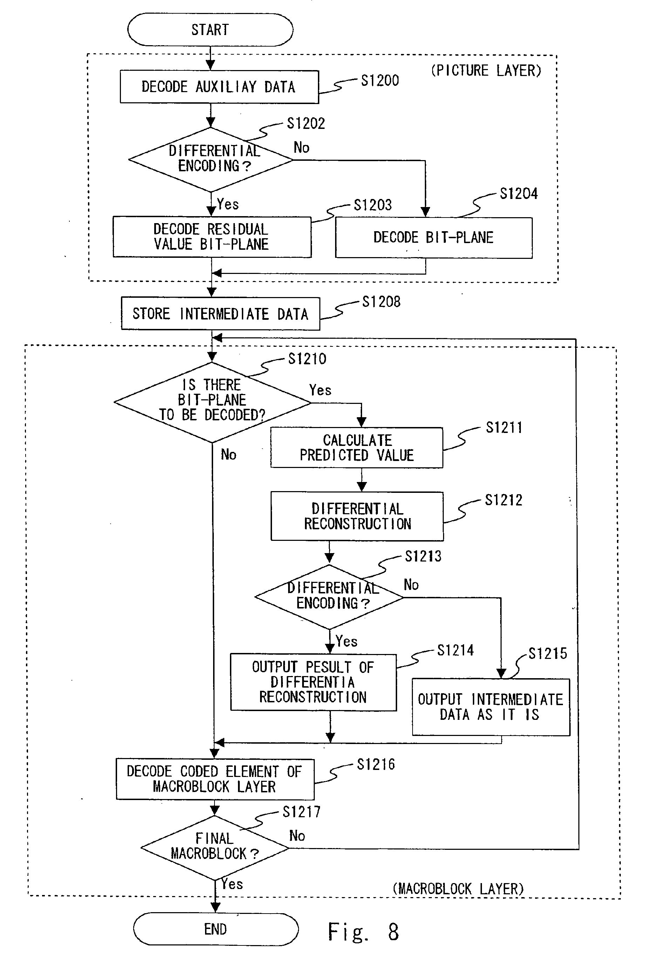

Fig. 8 is a flowchart showing the process flow in the data processing device 200 shown in Fig. 5. Firstly, the bit-plane picture layer decoding unit 201 performs processing in a picture layer (S1200 to S1204). Specifically, the bit-plane picture layer decoding unit 201 decodes auxiliary data (S1200). If a coded bit-plane is a coded residual value bit-plane that is produced by differential encoding, the residual value bit-plane decoding unit 203 performs decoding until obtaining a residual value bit-plane (Yes in S1202, S1203) . On the other hand, if a coded bit-plane is a non-differential coded bit-plane that is produced by non-differential encoding, the non-differential coded bit-plane decoding unit 204 performs decoding to thereby produce a completely decoded bit-plane (No in S1202, S1204).

A decoding result of the bit-plane picture layer decoding unit 201 is stored in the storage unit 210 in units of pictures (S1208) .

The processing after Step S1210 is performed in a macroblock layer.

Firstly, in Step S1210, the bit-plane macroblock layer decoding unit 220 checks whether there is a bit-plane to be decoded in a target macroblock. It checks whether binary flag information of a target macroblock is bit-plane encoded or not. If there is a bit-plane to be decoded (Yes in S1210), the predicted value calculation unit 221 calculates a predicted value p for the target macroblock, and then the differential reconstruction unit 222 performs exclusive OR operation between the intermediate data and the predicted value p (S1211, S1212).

The selector 223 operates differently depending on whether auxiliary data indicates differential encoding or non-differential encoding. Specifically, if the auxiliary data indicates non-differential encoding, the selector 223 outputs intermediate data of the target macroblock as a bit-plane decoding result b without making any change (No in S1213, S1215) . On the other hand, if the auxiliary data indicates differential encoding, the selector 223 outputs an operation result of the differential reconstruction unit 222 as a bit-plane decoding result b (Yes in S1213, S1214).

If there are a plurality of bit-planes to be decoded in a target macroblock, the processing of S1211 to S1215 is performed on each of bit-planes.

The bit-plane decoding result b that is output from the selector 223 of the bit-plane macroblock layer decoding unit 220 to the macroblock layer decoding unit 230 is used for decoding of a coded element of a corresponding macroblock (S1216).

If there is no bit-plane to be decoded in Step S1210 (No in S1210), the macroblock layer decoding unit 230 decodes a coded element which is not bit-plane coded (S1216).

When the processing from Step S1210 to S1216 is performed on all macroblocks in one picture (Yes in S1217), the processing on the picture ends.

According to the second technique, in the process of decoding a differential-coded bit-plane that is contained in a picture header, it also first performs decoding to obtain a residual value bit-plane in a picture layer and then performs differential reconstruction in a macroblock layer. It is thereby possible to obtain the same advantages as in the data processing device 100 of Fig. 1.

Further, the data processing device 200 obtains bit-plane decoding results b of a coded residual value bit-plane that is produced by differential encoding and a non-differential coded bit-plane that is produced by non-differential encoding in a macroblock layer. It is thereby possible to use the same macroblock layer decoding unit for two kinds of bit-planes in a system that needs to be compatible with both a coded residual value bit-plane and a non-differential coded bit-plane. This enables reduction of a hardware scale.

As described above, the differential encoding generates a residual value bit-plane based on a predicted value for a bit-plane and encodes the residual value bit-plane with a given coding system. On the other hand, the non-differential encoding encodes a bit-plane itself, not a residual value. A coding system that is used in the non-differential encoding can be the same as a coding system that is used when encoding a residual value bit-plane. The second technique of the present invention may be applied to a system which needs to be compatible with a coded residual value bit-plane and a bit-plane that is non-differential encoded by the same coding system as a coding system used for the coded residual value bit-plane. This enables further reduction of a hardware scale.

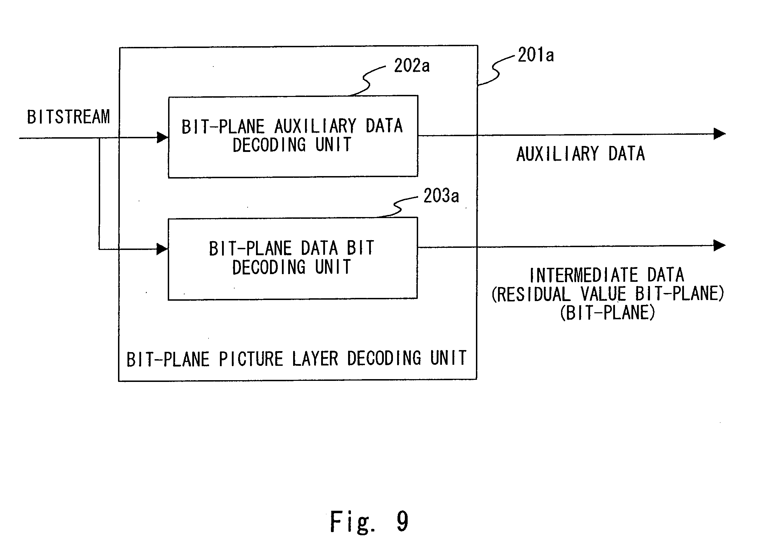

Fig. 9 shows the structure of a bit-plane picture layer decoding unit 201a, which is used instead of the bit-plane picture layer decoding unit 201 in the data processing device 200 shown in Fig. 5 in the case of processing such two kinds of coded bit-planes.

The bit-plane picture layer decoding unit 201a includes a bit-plane auxiliary data decoding unit 202a and a bit-plane data bit decoding unit 203a.

The bit-plane auxiliary data decoding unit 202a is the same as the bit-plane auxiliary data decoding unit 202 in the bit-plane picture layer decoding unit 201 shown in Fig. 6.

The bit-plane data bit decoding unit 203a decodes an input bit-plane. A coded residual value bit-plane and a non-differential coded bit-plane are encoded by the same coding system, and the residual value bit-plane decoding unit 203 performs the same processing on the both coded bit-planes. Accordingly, the intermediate data that is produced from the coded residual value bit-plane is a residual value bit-plane, and the intermediate data that is produced from the non-differential coded bit-plane is a completely decoded bit-plane.

This technique utilizes the fact that a coding system of a coded residual value bit-plane and a coding system of a non-differential coded bit-plane are the same, and uses the same bit-plane picture layer decoding unit for the two kinds of bit-planes. This allows further reduction of a circuit size.

Although a default value that is used by the predicted value calculation unit 221 of the bit-plane macroblock layer decoding unit 220 is retained in the prediction reference data retention unit 224 in the data processing device 200, the default value may be retained in the predicted value calculation unit 221. Further, if a default value is bit-plane decoded in a picture header as auxiliary data together with other flag information, the auxiliary data may be decoded at the same time as decoding in the bit-plane auxiliary data decoding unit 202 of the bit-plane picture layer decoding unit 201 and supplied to the predicted value calculation unit 221.

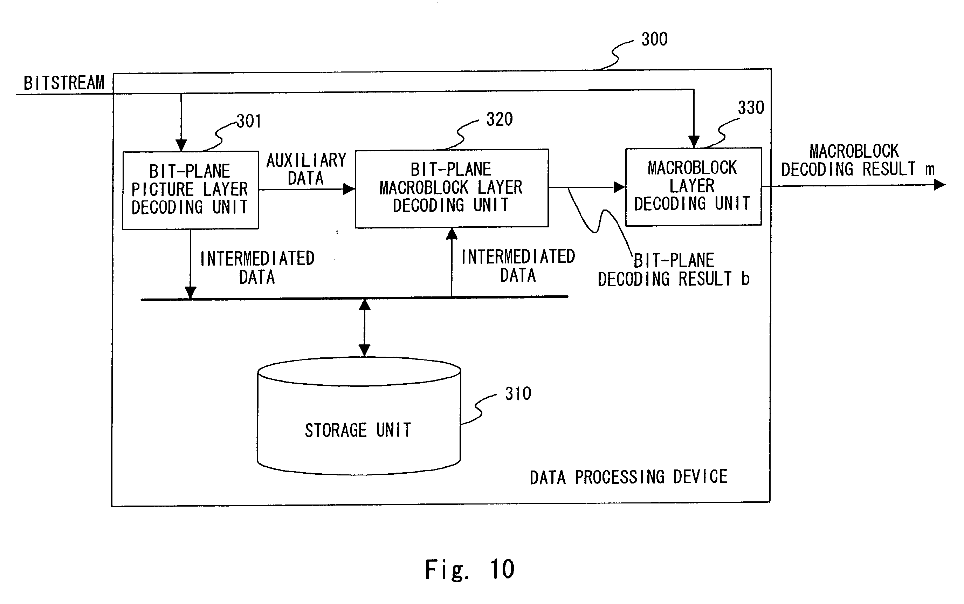

Fig. 10 shows the structure of a data processing device 300 according to a third technique of the present invention. The data processing device 300 partitions a picture into a plurality of macroblocks, decodes a coded bit-plane that is produced by encoding binary flag information of each macroblock in a bit-plane and further decodes a macroblock layer. The coded bit-plane is contained in a picture header, and it is either one of a coded residual value bit-plane that is produced by differential encoding or a non-differential coded bit-plane that is produced by non-differential encoding. The data processing device 300 is capable of processing these two kinds of coded bit-planes. A non-differential coded bit-plane that is targeted by the data processing device 300 is a coded conditionally inverted bit-plane that is produced by encoding a bit-plane after performing bit conditional inversion of an original bit-plane. The coded bit-plane contains auxiliary data that indicates whether the coded bit-plane is encoded by differential encoding or non-differential encoding and, if it is the non-differential encoding, indicates whether bit inversion is done or not. The auxiliary data that indicates whether bit inversion is performed is referred to herein as an inversion bit.

Referring to Fig. 10, the data processing device 300 includes a bit-plane picture layer decoding unit 301, a storage unit 310, a bit-plane macroblock layer decoding unit 320, and a macroblock layer decoding unit 330. A bit-stream, which is either a coded residual value bit-plane or a non-differential coded bit-plane, is input to the data processing device 300.

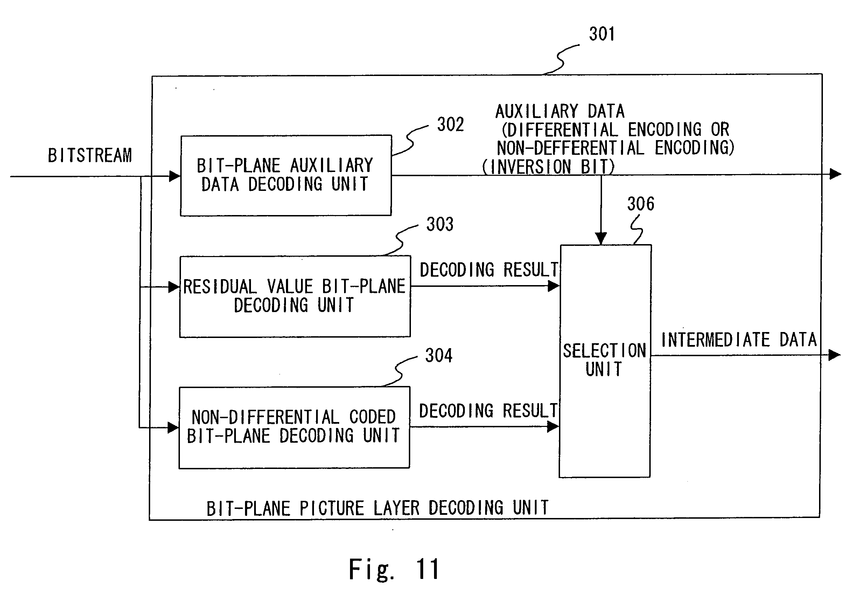

Fig. 11 shows the structure of the bit-plane picture layer decoding unit 301. The bit-plane picture layer decoding unit 301 performs processing in a picture layer. The bit-plane picture layer decoding unit 301 includes a bit-plane auxiliary data decoding unit 302, a residual value bit-plane decoding unit 303, a non-differential coded bit-plane decoding unit 304, and a selection unit 306.

The bit-plane auxiliary data decoding unit 302 decodes auxiliary data of an input bitstream and supplies the result to the bit-plane macroblock layer decoding unit 320 and the selection unit 306. The auxiliary data indicates whether an input bit-plane is encoded by differential encoding or non-differential encoding, and an inversion bit. Because a non-differential coded bit-plane is a coded conditionally inverted bit-plane, the auxiliary data that indicates a non-differential coded bit-plane also indicates a coded conditionally inverted bit-plane.

The residual value bit-plane decoding unit 303 and the non-differential coded bit-plane decoding unit 304 decode a coded bit-plane and output a decoding result to the selection unit 306. The residual value bit-plane decoding unit 303 is the same as the residual value bit-plane decoding unit 101 shown in Fig. 1 and thus not described in detail herein. A decoding result that is produced by the residual value bit-plane decoding unit 303 when a coded bit-plane is a residual value bit-plane is a residual value bit-plane. On the other hand, a decoding result that is produced by the non-differential coded bit-plane decoding unit 304 when a coded bit-plane is a non-differential coded bit-plane is a conditionally inverted bit-plane.

The selection unit 306 selects either one output from the residual value bit-plane decoding unit 303 or the non-differential coded bit-plane decoding unit 304 as intermediate data based on the auxiliary data, and outputs it to the storage unit 310, which serves as an intermediate data storage unit. Specifically, if the auxiliary data indicates that a coded bit-plane is encoded by differential encoding, the selection unit 306 selects and outputs a decoding result of the residual value bit-plane decoding unit 303. If, on the other hand, the auxiliary data indicates that a coded bit-plane is encoded by non-differential encoding, the selection unit 306 selects and outputs a decoding result of the non-differential coded bit-plane decoding unit 304.

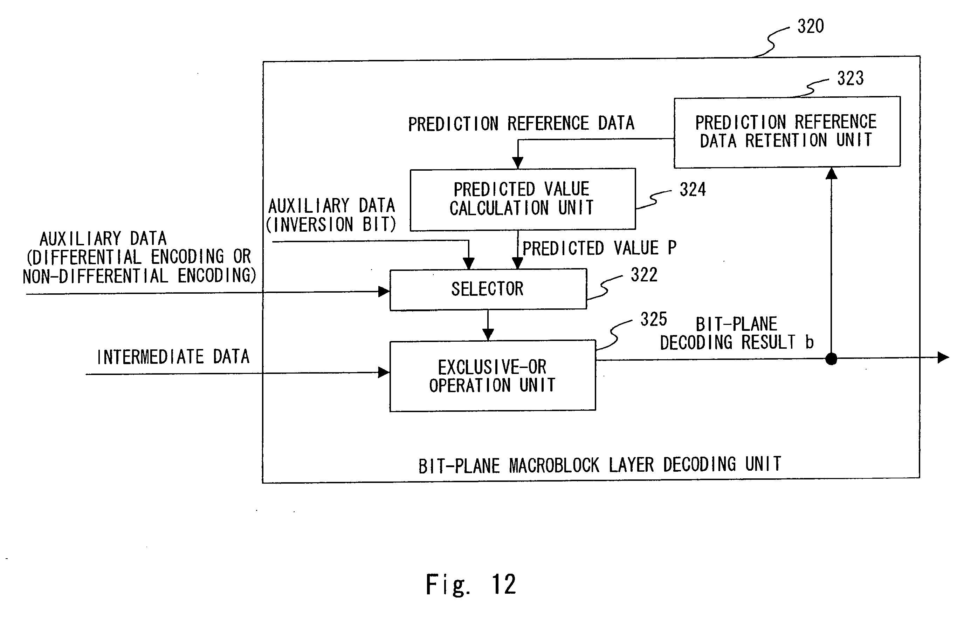

Fig. 12 shows the structure of the bit-plane macroblock layer decoding unit 320. The bit-plane macroblock layer decoding unit 320 performs processing in a macroblock layer. The bit-plane macroblock layer decoding unit 320 includes a selector 322, a prediction reference data retention unit 323, a predicted value calculation unit 324, and an exclusive-OR operation unit 325.

The predicted value calculation unit 324 and the prediction reference data retention unit 323 are the same as the corresponding elements of the bit-plane macroblock layer decoding unit 103 shown in Fig. 1 and thus not described in detail herein.

A predicted value p that is calculated by the predicted value calculation unit 324 and auxiliary data that is generated by the bit-plane picture layer decoding unit 301 are input to the selector 322. If the auxiliary data indicates differential encoding, the selector 322 outputs the predicted value p to the exclusive-OR operation unit 325. If, on the other hand, the auxiliary data indicates non-differential encoding, the selector 322 outputs an inversion bit to the exclusive-OR operation unit 325.

The exclusive-OR operation unit 325 performs exclusive-OR operation between the output of the selector 322 and the intermediate data of the macroblock to thereby obtain a bit-plane decoding result b. The bit-plane decoding result b is supplied to the macroblock layer decoding unit 330 and the prediction reference data retention unit 323.

Specifically, when the intermediate data is a residual value, the exclusive-OR operation unit 325 performs exclusive-OR operation between the residual value and the predicted value p. This exclusive-OR operation corresponds to differential reconstruction, which produces a bit-plane decoding result b of the macroblock.

On the other hand, when the intermediate data is data of a conditionally inverted bit-plane, the exclusive-OR operation unit 325 performs exclusive-OR operation between the intermediate data and the inversion bit. This exclusive-OR operation corresponds to bit conditional inversion, which produces a bit-plane decoding result b of the macroblock.

The conditional inversion encoding encodes a bit-plane after determining whether or not to invert it before encoding based on conditions such as the structure of the bit-plane. A coded bit-plane contains an inversion bit that indicates whether the coded bit-plane is inverted before encoding. The inversion bit is 1 bit that indicates inversion or non-inversion with 1 and 0, like an INVERT value in the VC-1 standard. When the auxiliary data indicates non-differential encoding, the selector 322 supplies the inversion bit to the exclusive-OR operation unit 325, so that the intermediate data produced from a non-differential coded bit-plane is bit-inverted if it is inverted before encoding and not bit-inverted if it is not inverted before encoding.

The macroblock layer decoding unit 330 decodes a macroblock layer with the use of the bit-plane decoding result b that is supplied from the bit-plane macroblock layer decoding unit 320. This processing is the same as the processing in the macroblock layer decoding unit 105 and thus not described in detail herein.

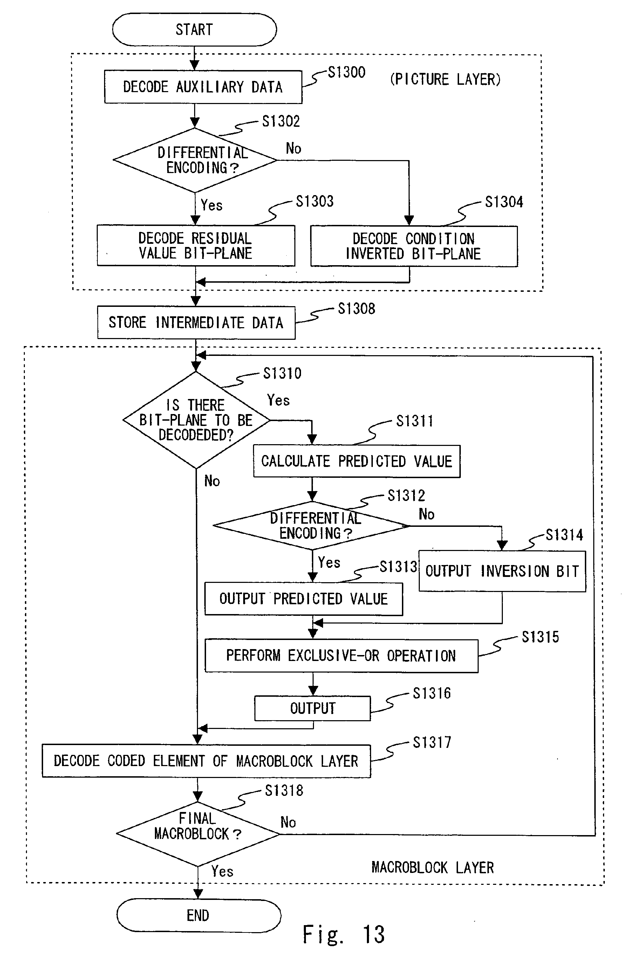

Fig. 13 is a flowchart showing the process flow in the data processing device 300 shown in Fig. 10. Firstly, the bit-plane picture layer decoding unit 301 performs processing in a picture layer (S1300 to S1304). Specifically, the bit-plane picture layer decoding unit 301 decodes auxiliary data (S1300). If a coded bit-plane is a coded residual value bit-plane that is produced by differential encoding, the residual value bit-plane decoding unit 303 performs decoding until obtaining a residual value bit-plane (Yes in S1302, S1303). On the other hand, if a coded bit-plane is a coded conditionally inverted bit-plane that is produced by non-differential encoding, the non-differential coded bit-plane decoding unit 304 performs decoding until obtaining a conditionally inverted bit-plane (No in S1302, S1304) .

A decoding result of the bit-plane picture layer decoding unit 301 is stored in the storage unit 310 in units of pictures (S1308) .

The processing after Step S1310 is performed in a macroblock layer.

Firstly, in Step S1310, the bit-plane macroblock layer decoding unit 320 checks whether there is a bit-plane to be decoded in a target macroblock. It checks whether binary flag information of a target macroblock is bit-plane encoded or not. If there is a bit-plane to be decoded (Yes in S1310), the predicted value calculation unit 324 calculates a predicted value p for the target macroblock (S1311). Then, the selector 322 outputs an inversion bit when auxiliary data indicates non-differential encoding (No in S1312, S1314), and it outputs a predicted value p when auxiliary data indicates differential encoding (Yes in S1312, S1313).

The exclusive-OR operation unit 325 performs exclusive-OR operation between the output of the selector 322 and the intermediate data, thereby obtaining a bit-plane decoding result b of a target macroblock (S1315). The bit-plane decoding result b is supplied to the prediction reference data retention unit 323 and the macroblock layer decoding unit 330 (S1316).

If there are a plurality of bit-planes to be decoded in a target macroblock, the processing of S1311 to S1316 is performed on each of bit-planes.

The bit-plane decoding result b that is output from the bit-plane macroblock layer decoding unit 320 to the macroblock layer decoding unit 330 is used for decoding of a coded element of a corresponding macroblock (S1317).

If there is no bit-plane to be decoded in Step S1310 (No in S1310), the macroblock layer decoding unit 330 decodes a coded element which is not bit-plane coded (S1317).

When the processing from Step S1310 to S1317 is performed on all macroblocks in one picture (Yes in S1318), the processing on the picture ends.

According to the third technique, in the process of decoding a differential-coded bit-plane that is contained in a picture header, it also first performs decoding to obtain a residual value bit-plane in a picture layer and then performs differential reconstruction in a macroblock layer. It is thereby possible to obtain the same advantages as in the data processing device 100 of Fig. 1 .

Further, in the process of decoding a coded conditionally inverted bit-plane, the data processing device 300 first performs decoding to obtain a conditionally inverted bit-plane in a picture layer and then performs bit conditional inversion in a macroblock layer. It thus requires only one-time access to an intermediate data storage unit that stores a conditionally inverted bit-plane as intermediate data when performing bit conditional inversion in one macroblock. In addition, the amount of data to be read at a time is small. It is thereby possible to reduce the data transmission amount in decoding a bit-plane, thus decreasing an access bandwidth between a bit conditional inversion unit and an intermediate data storage unit.

Further, because the bit conditional inversion is performed in a macroblock layer, the bit-plane macroblock layer decoding unit 320 can output a bit-plane decoding result b directly to the macroblock layer decoding unit 330. It is thereby possible to eliminate a step of writing back a bit-plane decoding result b to an intermediate data storage unit and a step of reading a bit-plane decoding result b by the macroblock layer decoding unit 330 when performing the bit conditional inversion. This improves the efficiency.

Furthermore, the data processing device 300 uses the same bit-plane macroblock layer decoding unit for the decoding of both a coded residual value bit-plane and a coded conditionally inverted bit-plane, utilizing the fact that the differential reconstruction processing is the exclusive-OR operation between a predicted value and a residual value, and the bit conditional inversion processing is exclusive-OR operation between conditionally inverted bit-plane data and an inversion bit. This enables reduction of a circuit size.

In addition, the data processing device 300 obtains bit-plane decoding results b of a coded residual value bit-plane that is produced by differential encoding and a coded conditionally inverted bit-plane that is produced by non-differential encoding both in a macro block layer. It is thereby possible to use the same macroblock layer decoding unit for two kinds of bit-planes in a system that needs to be compatible with both a coded residual value bit-plane and a coded conditionally inverted bit-plane. This enables reduction of a hardware scale.

Although a default value that is used by the predicted value calculation unit 324 of the bit-plane macroblock layer decoding unit 320 is retained in the prediction reference data retention unit 323 in the data processing device 300, the default value may be retained in the predicted value calculation unit 324. Further, if a default value is bit-plane decoded in a picture header as a part of auxiliary data together with other flag information, the auxiliary data may be decoded at the same time as decoding in the bit-plane auxiliary data decoding unit 302 of the bit-plane picture layer decoding unit 301 and supplied to the predicted value calculation unit 324.

As described above, the conditional inversion encoding produces a conditionally inverted bit-plane by performing bit conditional inversion on a bit-plane and encodes the conditionally inverted bit-plane with a given coding system. There are various coding systems in encoding a conditionally inverted bit-plane for the same conditional inversion encoding. The third technique of the present invention may be applied to a system which needs to be compatible with a coded residual value bit-plane and coded conditionally inverted bit-planes that are produced by a plurality of, e.g., two, different coding systems. This enables further reduction of a hardware scale.

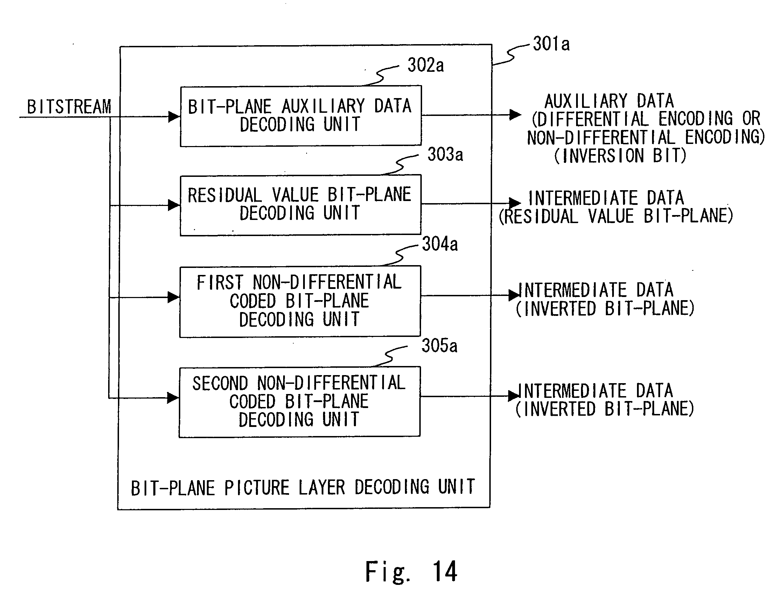

Fig. 14 shows the structure of a bit-plane picture layer decoding unit 301a, which is used instead of the bit-plane picture layer decoding unit 301 in the data processing device 300 shown in Fig. 10 in the case of processing such three kinds of coded bit-planes.

The bit-plane picture layer decoding unit 301a includes a bit-plane auxiliary data decoding unit 302a, a residual value bit-plane decoding unit 303a, a first non-differential coded bit-plane decoding unit 304a, and a second non-differential coded bit-plane decoding unit 305a.

The bit-plane auxiliary data decoding unit 302a is the same as the bit-plane auxiliary data decoding unit 302 in the bit-plane picture layer decoding unit 301 shown in Fig. 11.

The residual value bit-plane decoding unit 303a is the same as the residual value bit-plane decoding unit 303 in the bit-plane picture layer decoding unit 301 shown in Fig. 11, and it performs decoding of a coded residual value bit-plane until obtaining a residual value bit-plane.

The first non-differential coded bit-plane decoding unit 304a and the second non-differential coded bit-plane decoding unit 305a respectively correspond to different coding systems, and they perform decoding of a coded conditionally inverted bit-plane that is encoded by a corresponding coding system until obtaining a conditionally inverted bit-plane.

Although a process of obtaining conditionally inverted bit-planes from the coded conditionally inverted bit-planes that are produced by a plurality of different coding systems is different, a process of conditional inversion on conditionally inverted bit-planes is the same. Therefore, in such a structure, it is possible to use the same processing unit that performs bit conditional inversion in a macroblock layer, which allows reduction of a circuit size.

The principles of the coding techniques according to the present invention are described in the foregoing. These techniques may be used alone or in combination, both offering the same advantages.

The invention will be now described herein with reference to illustrative embodiments. Those skilled in the art will recognize that many alternative embodiments can be accomplished using the teachings of the present invention and that the invention is not limited to the embodiments illustrated for explanatory purposes.

A system that implements the above-described principles is described hereinafter.

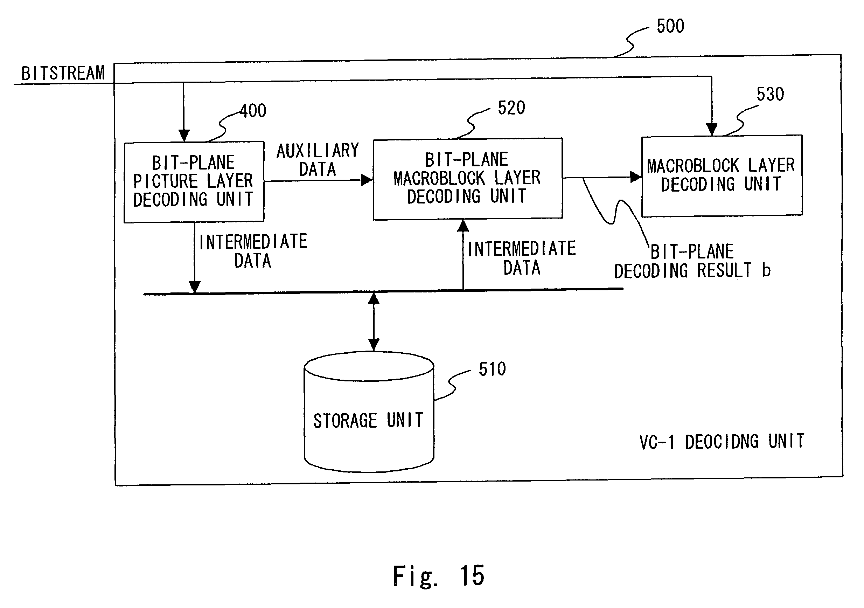

Fig. 15 shows a VC-1 decoding device 500 in which the decoding technique of the present invention is applied to decoding of a VC-1 bit-plane. The VC-1 decoding device 500 decodes a bit-plane that is contained in compressed data in the VC-1 standard and also decodes a macroblock layer. As described earlier, encoding of a bit-plane in the VC-1 standard is sorted into a plurality of methods which are indicated by different modes. These modes are: raw mode, normal-2 mode, diff-2 mode, normal-6 mode, diff-6 mode, row-skip mode, and column-skip mode. As shown in Fig. 30, the coded bit-plane 1910 of the VC-1 standard includes the IMODE 2102 that indicates by which mode the bit-plane is encoded and the inversion bit 2101 (which is referred to herein as the INVERT value). The INVERT value 2101 is used as a default value when calculating a predicted value in the diff-2 mode and the diff-6 mode, and it is used as a value indicating whether or not to invert a result of decoding in the other modes (excluding the raw mode). Specifically, if the INVERT value 2101 is 1, it indicates inversion, and if the INVERT value 2101 is 0, it indicates non-inversion. In the raw mode, information of a macroblock is encoded one bit by one bit in a macroblock layer, and encoding of a bit-plane is not performed. In such a case, there is no data bit 2103 after the IMODE 2102.

The VC-1 decoding device 500 includes a bit-plane picture layer decoding unit 400, a storage unit 510, a bit-plane macroblock layer decoding unit 520, and a macroblock layer decoding unit 530. A bitstream, which is a coded bit-plane encoded by any one of the seven kinds of coding methods described above, is input to the VC-1 decoding device 500.

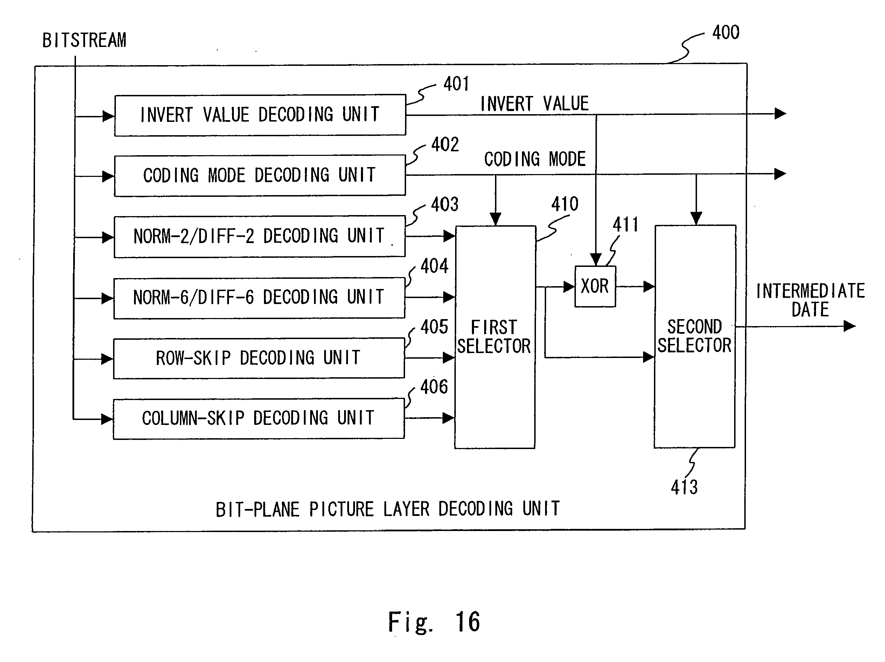

Fig. 16 shows the structure of the bit-plane picture layer decoding unit 400. The bit-plane picture layer decoding unit 400 performs processing in a picture layer. The bit-plane picture layer decoding unit 400 includes an INVERT value decoding unit 401, a coding mode decoding unit 402, a norm-2/diff-2 decoding unit 403, a norm-6/diff-6 decoding unit 404, a row-skip decoding unit 405, a column-skip decoding unit 406, a first selector 410, an XOR 411, and a second selector 413.

The INVERT value decoding unit 401 and the coding mode decoding unit 402 decode an INVERT value and a coding mode (which is also referred to herein as IMODE), which correspond to auxiliary data in a VC-1 coded bit-plane, respectively.

The norm-2/diff-2 decoding unit 403 performs decoding on bit-planes that are encoded by the normal-2 mode and the diff-2 mode up to some point halfway through the decoding process. The normal-2 mode is a conditional inversion encoding mode. This mode encodes a bit-plane after inverting it or encodes a bit-plane as it is according to the INVERT value. A coded bit-plane that is produced in this mode is referred to hereinafter as a coded conditionally inverted bit-plane. The diff-2 mode is a differential encoding mode. This mode encodes a residual value bit-plane. Because the coding system is the same in those two coding modes, the norm-2/diff-2 decoding unit 403 performs decoding corresponding to each coding system on the coded bit-planes of those two modes, thereby producing a conditionally inverted bit-plane and a residual value bit-plane, respectively.

The norm-6/diff-6 decoding unit 404 decodes bit-planes that are encoded by the normal-6 mode and the diff-6 mode up to some point halfway through the decoding process. The norm-6/diff-6 decoding unit 404 produces a conditionally inverted bit-plane and a residual value bit-plane from the coded bit-planes of those two modes, respectively.

The row-skip decoding unit 405 and the column-skip decoding unit 406 correspond to the row-skip mode and the column-skip mode, respectively, and perform decoding on coded bit-planes of those two modes up to some point halfway through the decoding process. Because the row-skip mode and the column-skip mode are conditional inversion encoding modes, decoding results produced by the row-skip decoding unit 405 and the column-skip decoding unit 406 are conditionally inverted bit-planes.

The first selector 410 receives the IMODE that is decoded by the coding mode decoding unit 402. The first selector 410 selects an output of a decoding unit corresponding to the coding mode indicated by the IMODE from the four decoding units and outputs it to the XOR 411 and the second selector 413.

The XOR 411 performs exclusive-OR operation between the output from the first selector 410 and the INVERT value supplied from the INVERT value decoding unit 401, and outputs the operation result to the second selector 413.

The second selector 413 selects either one of an output from the XOR 411 and an output from the first selector 410 based on the IMODE obtained by the coding mode decoding unit 402 and outputs the selected one as intermediate data to the storage unit 510. Specifically, when the IMODE indicates a conditional inversion encoding mode (the row-skip mode, the column-skip mode, the normal-2 mode, the normal-6 mode), the second selector 413 selects the operation result of the XOR 411. When the IMODE indicates a differential encoding mode (the diff-2 mode, the diff-6 mode), the second selector 413 selects the output of the first selector 410.

Thus, for a differential coded bit-plane, a residual value bit-plane is input as intermediate data to the storage unit 510. For a coded conditionally inverted bit-plane, the conditional inversion processing is performed after a conditionally inverted bit-plane is produced; as a result, a bit-plane decoding result b is input as intermediate data to the storage unit 510.

The storage unit 510, which serves as an intermediate data storage unit, stores the output of the second selector 413.

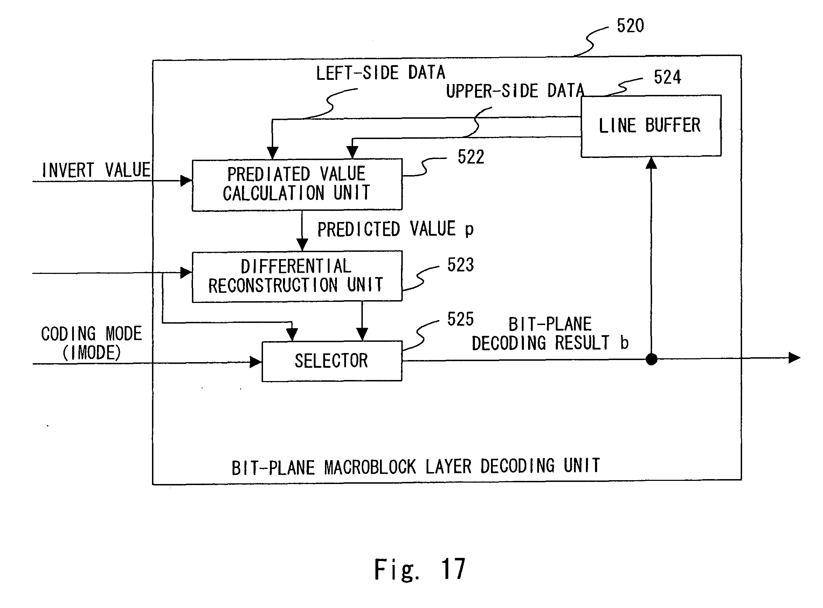

Fig. 17 shows the structure of the bit-plane macroblock layer decoding unit 520. The bit-plane macroblock layer decoding unit 520 performs processing in a macroblock layer. The bit-plane macroblock layer decoding unit 520 includes a predicted value calculation unit 522, a differential reconstruction unit 523, a line buffer 524, and a selector 525.

An INVERT value is input to the predicted value calculation unit 522. The predicted value calculation unit 522 receives the INVERT value as a predicted value p for a first macroblock. The predicted value calculation unit 522 calculates predicted values p for other macroblocks in different positions with the use of the upper-side and left-side data (which are described in detail later) of a corresponding macroblock among reference data that are stored in the line buffer 524.

The differential reconstruction unit 523 performs differential reconstruction by reading intermediate data of one macro each from the storage unit 510 and performing exclusive-OR operation with a predicted value p.

The selector 525 selects either an output of the differential reconstruction unit 523 or intermediate data according to the IMODE and outputs the selected one as a bit-plane decoding result b. Specifically, the selector 525 outputs an output of the differential reconstruction unit 523 when the IMODE indicates the differential encoding mode (the diff-2 mode or the diff-6 mode), and it outputs intermediate data when the IMODE indicates the conditional inversion encoding mode, both as a bit-plane decoding result b.

The bit-plane decoding result b is supplied to the macroblock layer decoding unit 530 and also to the line buffer 524 .

The line buffer 524 holds reference data that is used for calculating a predicted value p of a macroblock to be processed after the macroblock for which the bit-plane decoding result b is obtained already for a necessary period of time only.

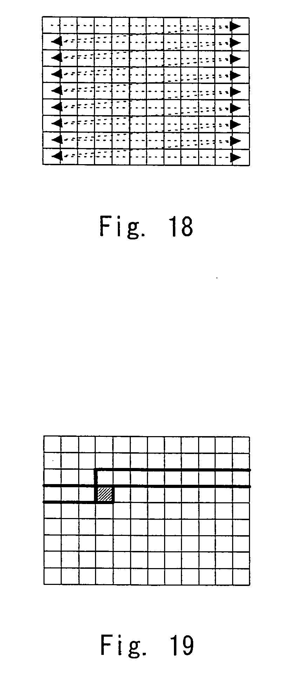

As shown in Fig. 18, the scanning in the VC-1 standard begins with a macroblock at the upper left corner of one picture and moves to the right. Upon reaching the right end, it proceeds to a macroblock in the left end of the line immediately below and moves from the left to the right in each row. This is repeated until reaching a macroblock at the lower right corner of one picture.

The data (bit-plane decoding result b) that is referred to for calculating a predicted value when decoding a bit-plane that is encoded by the differential mode in the VC-1 standard is data on the upper side and the left side of a macroblock. Thus, if a macroblock in the diagonally shaded area in Fig. 19 is a macroblock during processing, bit-plane decoding results b of macroblocks in one row surrounded by the heavy line in Fig. 19 need to be stored for a macroblock to be processed after this macroblock. The line buffer 524 stores only a part of the data of macroblocks for which a bit-plane decoding result b is obtained already which is necessary for calculating a predicted value of a subsequent macroblock.

The macroblock layer decoding unit 530 decodes a macroblock layer with the use of the bit-plane decoding result b that is supplied from the bit-plane macroblock layer decoding unit 520, thereby obtaining a macroblock decoding result m.

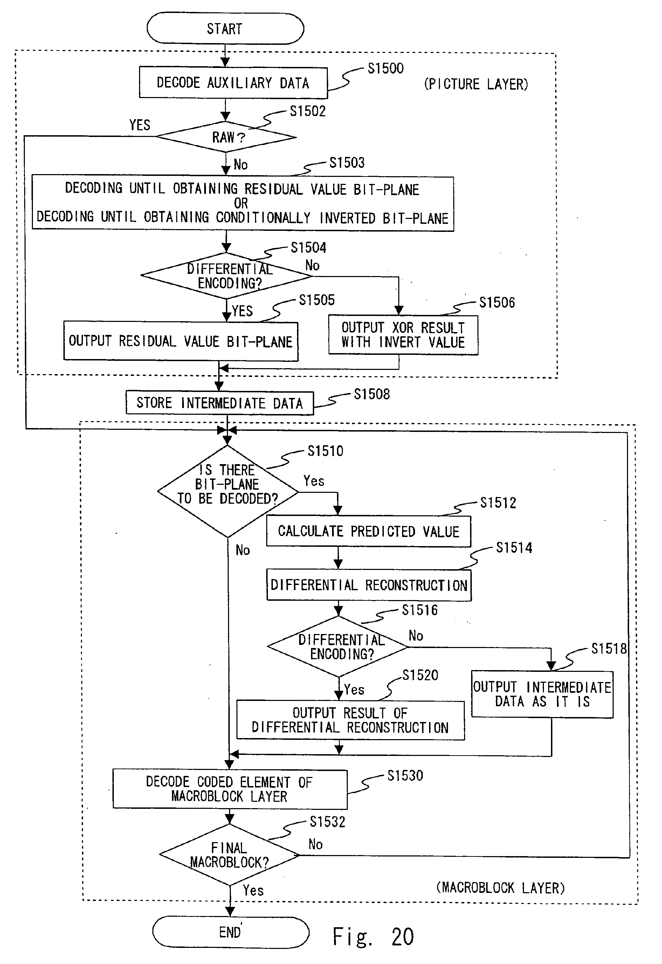

Fig. 20 is a flowchart showing the process flow in the VC-1 decoding device 500 of Fig. 15. Firstly, the bit-plane picture layer decoding unit 400 performs processing in a picture layer (S1500 to S1508) . Specifically, an INVERT value and an IMODE are decoded firstly (S1500) . If the IMODE indicates the raw mode (Yes in S1502), the process proceeds to the processing of a macroblock layer. If, on the other hand, the IMODE indicates a mode different from the raw mode (No in S1502), the process performs decoding corresponding to its coding system (S1503). The decoding is processing until obtaining a residual value bit-plane for a coded residual value bit-plane, and it is processing until obtaining a conditionally inverted bit-plane for a coded conditionally inverted bit-plane.

A decoding result that is produced by the above decoding is conditionally inverted by exclusive-OR operation with the INVERT value in the XOR 411. If the IMODE indicates the differential encoding, the second selector 413 outputs a decoding result before the conditional inversion by the XOR 411, which is a residual value bit-plane, as intermediate data to the storage unit 510 (Yes in S1504, S11505) . On the other hand, if the IMODE indicates the conditional inversion encoding, the second selector 413 outputs an operation result of the XOR 411 as intermediate data to the storage unit 510 (No in S1504, S1506) .

The intermediate data is stored in the storage unit 510 (S1508).

The processing after Step S1510 is performed in a macroblock layer.

Firstly, in Step S1510, the bit-plane macroblock layer decoding unit 520 checks if there is a bit-plane to be decoded for a target macroblock. It checks whether the IMODE indicates the raw mode or not.

If the IMODE indicates a different mode from the raw mode (Yes in S1510), a predicted value p for a target macroblock is calculated based on the INVERT value or the reference data that is stored in the line buffer 524 (S1512) . Then, the differential reconstruction unit 523 performs exclusive-OR operation between the intermediate data and the predicted value p (S1514) . If the IMODE indicates the differential encoding, the selector 525 outputs an output of the differential reconstruction unit 523 as a bit-plane decoding result b (Yes in S1516, S1520) . If the IMODE indicates the conditional inversion encoding, the selector 525 outputs the intermediate data as a bit-plane decoding result b (No in S1516, S1518).

In Steps S1520 and S1518, the bit-plane decoding result b is supplied to the line buffer 524 and the macroblock layer decoding unit 530. The line buffer 524 holds the bit-plane decoding result b as reference data for a necessary period of time only.

If there are a plurality of bit-planes to be decoded in a target macroblock, the processing of S1512 to S1520 is performed on each of bit-planes.

The bit-plane decoding result b that is output from the bit-plane macroblock layer decoding unit 520 to the macroblock layer decoding unit 530 is used for decoding of a coded element of a corresponding macroblock (S1530).

If the IMODE indicates the raw mode in S1510 (No in S1510), the macroblock layer decoding unit 530 decodes a coded element that is not bit-plane encoded (S1530).

When the processing from Step S1510 to S1530 is performed on all macroblocks in one picture (Yes in S1532), the processing on the picture ends.

In the VC-1 decoding device 500 of this embodiment, the technique for the data processing device 100 and the data processing device 200 are applied to decoding of a bit plane in the VC-1 standard. The advantages of the above two techniques can be thereby obtained.

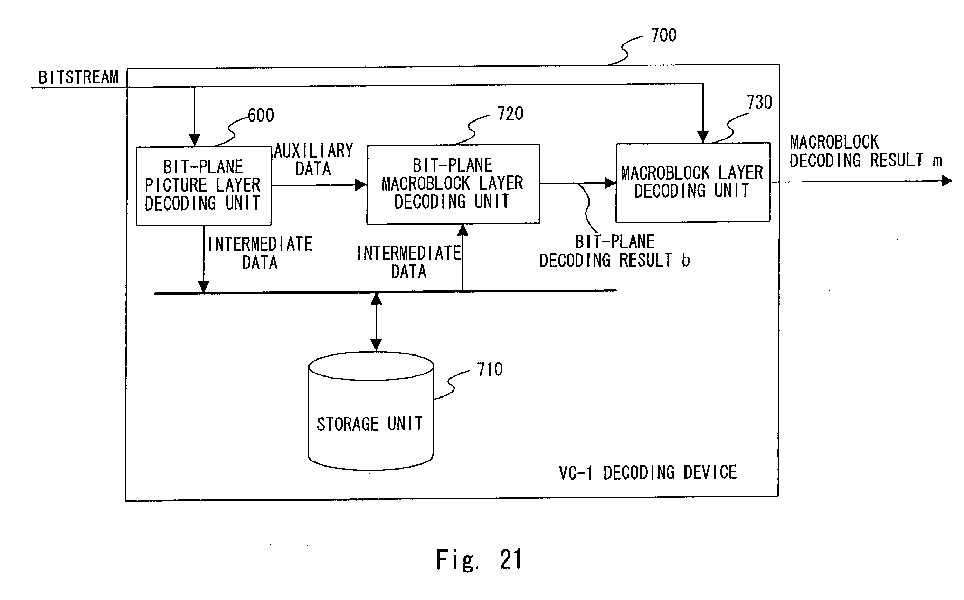

Fig. 21 shows a VC-1 decoding device 700 in which the decoding technique of the present invention is applied to decoding of a VC-1 bit-plane. Like the VC-1 decoding device 500, the VC-1 decoding device 700 decodes a bit-plane that is contained in compressed data in the VC-1 standard and also decodes a macroblock layer. Although the VC-1 decoding device 500 performs conditional inversion processing of a conditionally inverted bit-plane in a picture layer, the VC-1 decoding device 700 performs the conditional inversion processing in a macroblock layer.

The VC-1 decoding device 700 includes a bit-plane picture layer decoding unit 600, a storage unit 710, a bit-plane macroblock layer decoding unit 720, and a macroblock layer decoding unit 730.

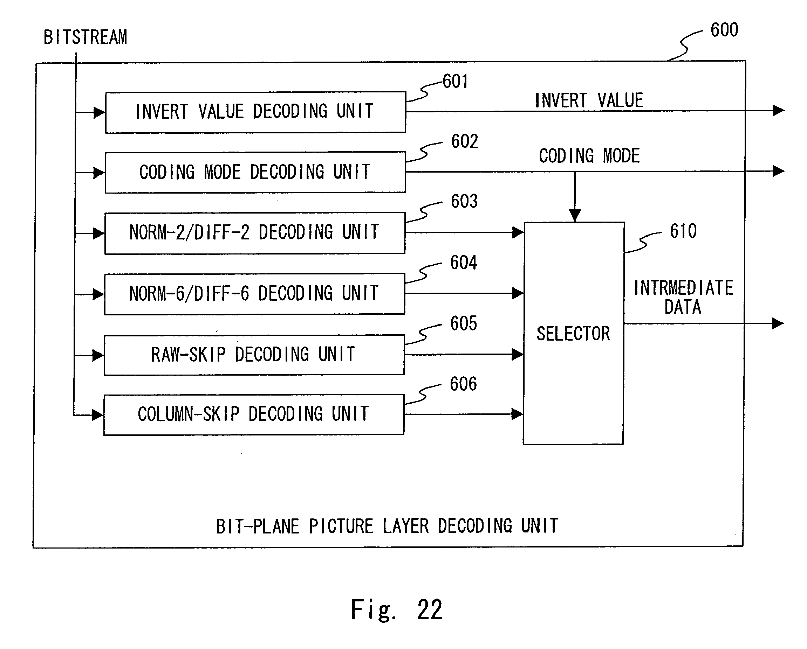

Fig. 22 shows the structure of the bit-plane picture layer decoding unit 600. The bit-plane picture layer decoding unit 600 includes an INVERT value decoding unit 601, a coding mode decoding unit 602, a norm-2/diff-2 decoding unit 603, a norm-6/diff-6 decoding unit 604, a row-skip decoding unit 605, a column-skip decoding unit 606, and a selector 610.

The INVERT value decoding unit 601, the coding mode decoding unit 602, the norm-2/diff-2 decoding unit 603, the norm-6/diff-6 decoding unit 604, the row-skip decoding unit 605 and the column-skip decoding unit 606 have the same functions as the corresponding elements in the VC-1 decoding device 500. Thus, they are not described in detail herein.

The selector 610 receives an IMODE that is decoded by the coding mode decoding unit 602. The selector 610 selects an output of a decoding unit corresponding to the coding mode indicated by the IMODE from the four decoding units and outputs it to the storage unit 710. The intermediate data that is output from the bit-plane picture layer decoding unit 600 is a residual value bit-plane in the differential encoding mode, and it is a conditionally inverted bit-plane in the conditional inversion encoding mode.

The storage unit 710, which serves as an intermediate data storage unit, stores the output of the selector 610.

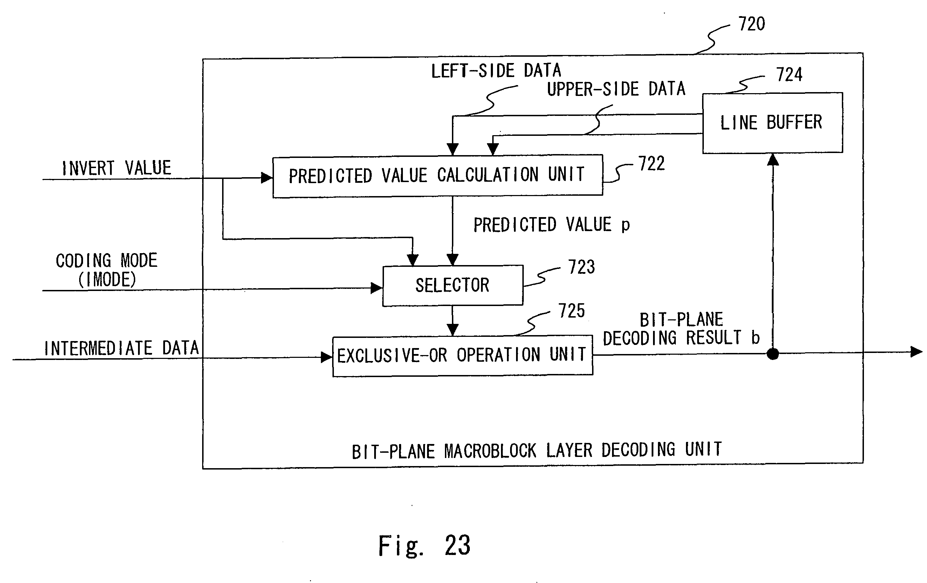

Fig. 23 shows the structure of the bit-plane macroblock layer decoding unit 720. The bit-plane macroblock layer decoding unit 720 performs processing in a macroblock layer. The bit-plane macroblock layer decoding unit 720 includes a predicted value calculation unit 722, a selector 723, a line buffer 724, and an exclusive-OR operation unit 725.

The predicted value calculation unit 722 and the line buffer 724 are the same as the predicted value calculation unit 522 and the line buffer 524 in the VC-1 decoding device 500 and thus not described in detail herein.

The selector 723 receives an INVERT value, a predicted value p, and an IMODE. According to the IMODE, the selector 723 outputs either the INVERT value or the predicted value p to the exclusive-OR operation unit 725. Specifically, the selector 723 outputs the predicted value p when the IMODE indicates the differential encoding mode, and it outputs the INVERT value when the IMODE indicates the conditional inversion encoding mode.

The exclusive-OR operation unit 725 reads intermediate data from the storage unit 710 for one macroblock each and performs exclusive-OR operation with an output from the selector 723 for a corresponding macroblock, thereby obtaining a bit-plane decoding result b of the macroblock. Therefore, in the differential encoding mode, the bit-plane decoding result b is a result of exclusive-OR operation between the intermediate data and the predicted value p. In the conditional inversion encoding mode, the bit-plane decoding result b is the intermediate data that is conditionally inverted according to the INVERT value. Thus, the exclusive-OR operation unit 725 serves both as a differential reconstruction unit and a bit inversion unit.

The bit-plane decoding result b that is obtained by the exclusive-OR operation unit 725 is supplied to the macroblock layer decoding unit 730 and also to the line buffer 724.

The line buffer 724 holds reference data that is used for calculating a predicted value p of a macroblock to be processed after the macroblock for which a bit-plane decoding result b is obtained already for a necessary period of time only.

The macroblock layer decoding unit 730 decodes a macroblock layer with the use of the bit-plane decoding result b that is supplied from the bit-plane macroblock layer decoding unit 720, thereby obtaining a macroblock decoding result m.

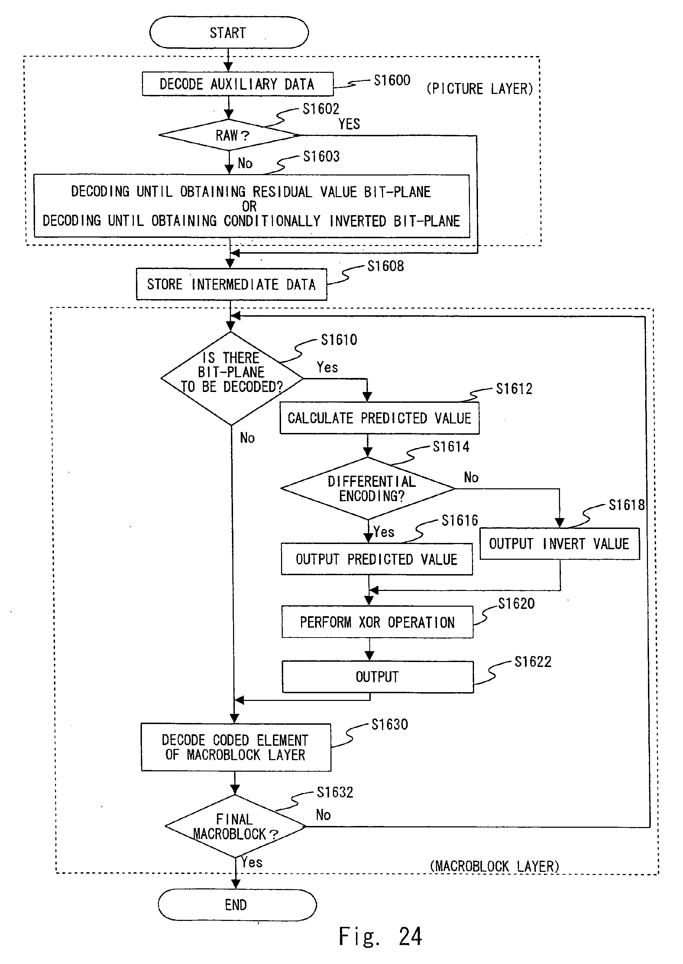

Fig. 24 is a flowchart showing the process flow in the VC-1 decoding device 700 of Fig. 21. Firstly, the bit-plane picture layer decoding unit 600 performs processing in a picture layer (S1600 to S1603) . Specifically, an INVERT value and an IMODE are decoded firstly (S1600) . If the IMODE indicates the raw mode (Yes in S1602), the process proceeds to the processing of a macroblock layer. If, on the other hand, the IMODE indicates a mode different from the raw mode (No in S1602), the process performs decoding corresponding to its coding system (S1603). The decoding is processing until obtaining intermediate data, and a residual value bit-plane is produced in the differential encoding mode, and a conditionally inverted bit-plane is produced in the conditional inversion encoding mode. The intermediate data is stored in the storage unit 710 (S1608).

The processing after Step S1610 is performed in a macroblock layer.

Firstly, in Step S1610, the bit-plane macroblock layer decoding unit 720 checks if there is a bit-plane to be decoded for a target macroblock. It checks whether the IMODE indicates the raw mode or not.

If the IMODE indicates a different mode from the raw mode (Yes in S1610), a predicted value p for a target macroblock is calculated based on the INVERT value or the reference data that is stored in the line buffer 724 (S1612). Then, if the IMODE indicates the differential encoding, the selector 723 outputs the predicted value p to the exclusive-OR operation unit 725 (Yes in S1614, S1616). If the IMODE indicates the conditional inversion encoding, the selector 723 outputs the INVERT value to the exclusive-OR operation unit 725 (No in S1614, S1618).

The exclusive-OR operation unit 725 performs exclusive-OR operation between the output of the selector 723 and the intermediate data, thereby obtaining a bit-plane decoding result b of a target macroblock (S1620). The bit-plane decoding result b is supplied to the line buffer 724 and the macroblock layer decoding unit 730 (S1622). The line buffer 724 holds the bit-plane decoding result b as reference data for a necessary period of time only.

If there are a plurality of bit-planes to be decoded in a target macroblock, the processing of S1612 to S1622 is performed on each of bit-planes.

The bit-plane decoding result b that is output from the bit-plane macroblock layer decoding unit 720 to the macroblock layer decoding unit 730 is used for decoding of a coded element of a corresponding macroblock (S1630).

If the IMODE indicates the raw mode in S1610 (No in S1610), the macroblock layer decoding unit 730 decodes a coded element that is not bit-plane encoded (S1630).

When the processing from Step S1610 to S1630 is performed on all macroblocks in one picture (Yes in S1632), the processing on the picture ends.

In the VC-1 decoding device 700 of this embodiment, the techniques for the data processing device 100, the data processing device 200 and the data processing device 300 are applied to decoding of a bit plane in the VC-1 standard. The advantages of the above three techniques can be thereby obtained. The VC-1 decoding device 700 performs conditional inversion processing of a conditionally inverted bit-plane in a macroblock layer, thereby enabling further reduction of a device size.

It is apparent that the present invention is not limited to the above embodiments, but may be modified and changed without departing from the scope and spirit of the invention.

**Claims**

1. A bit-plane decoding device to decode a coded bit-plane that is produced by encoding binary flag information of each macroblock in a picture partitioned into a plurality of macroblocks in a bit-plane and is contained in a picture header of compressed image data, the coded bit-plane being a coded residual value bit-plane produced by differential encoding of producing a residual value bit-plane based on a predicted value for a bit-plane and encoding the residual value bit-plane using a given coding system, the bit-plane decoding device comprising:

   a residual value bit-plane decoding unit to perform decoding on the coded residual value bit-plane until obtaining a residual value bit-plane and output a decoding result as intermediate data, the residual value bit-plane decoding unit configured to perform processing in a picture layer;
   an intermediate data storage unit to store the intermediate data; and
   a bit-plane macroblock layer decoding unit to perform differential reconstruction on the intermediate data to become the residual value bit-plane stored in the intermediate data storage unit and output final data, the bit-plane macroblock layer decoding unit configured to perform processing in a macroblock layer.

2. The bit-plane decoding device according to claim 1,
   wherein
   the coded bit-plane is a coded residual value bit-plane produced by differential encoding using one of a plurality of different kinds of coding systems, and
   the residual value bit-plane decoding unit includes a plurality of residual value bit-plane decoding units, each decoding a coded residual value bit-plane produced by differential encoding using a corresponding one of the plurality of coding systems to obtain intermediate data and outputting the intermediate data to the intermediate data storage unit.

3. The bit-plane decoding device according to claim 1, wherein

the coded bit-plane is one of a coded residual value bit-plane and a non-differential coded bit-plane produced by non-differential encoding,
the bit-plane decoding device further includes a non-differential coded bit-plane decoding unit to decode the non-differential coded bit-plane and output a decoding result as intermediate data to the intermediate data storage unit,
the non-differential coded bit-plane decoding unit configured to perform processing in a picture layer, and
the bit-plane macroblock layer decoding unit either outputs final data by performing differential reconstruction on the intermediate data of a coded residual value bit-plane or outputs the intermediate data of a non-differential coded bit-plane as final data.

4.  The bit-plane decoding device according to claim 2, wherein
the coded bit-plane is one of a coded residual value bit-plane and a non-differential coded bit-plane produced by non-differential encoding,
the bit-plane decoding device further includes a non-di fferential coded bit-plane decoding unit to decode the non-differential coded bit-plane and output a decoding result as intermediate data to the intermediate data storage unit,
the non-differential coded bit-plane decoding unit configured to perform processing in a picture layer, and
the bit-plane macroblock layer decoding unit either outputs final data by performing differential reconstruction on the intermediate data of a coded residual value bit-plane or outputs the intermediate data of a non-differential coded bit-plane as final data.

5.  The bit-plane decoding device according to claim 3, wherein
a residual value bit-plane decoding unit of the coded residual value bit-plane produced by differential encoding using a coding system of the non-differential coded bit-plane is a non-differential coded bit-plane decoding unit of the non-differential coded bit-plane.

6.  The bit-plane decoding device according to claim 4, wherein
a residual value bit-plane decoding unit of the coded residual value bit-plane produced by differential encoding using a coding system of the non-differential coded bit-plane is a non-differential coded bit-plane decoding unit of the non-differential coded bit-plane.

7.  The bit-plane decoding device according to claim 3, wherein
the non-differential coded bit-plane is a coded conditionally inverted bit-plane produced by conditional inversion encoding of producing a conditionally inverted bit-plane through bit conditional inversion on a bit-plane and encoding the conditionally inverted bit-plane using a given coding system,
the non-differential coded bit-plane decoding unit performs decoding on the coded conditionally inverted bit-plane until obtaining a conditionally inverted bit-plane and outputs a decoding result as intermediate data to the intermediate data storage unit, and
the bit-plane macroblock layer decoding unit performs bit conditional inversion on the intermediate data to become the conditionally inverted bit-plane stored in the intermediate data storage unit and outputs final data.

8.  The bit-plane decoding device according to claim 4, wherein
the non-differential coded bit-plane is a coded conditionally inverted bit-plane produced by conditional inversion encoding of producing a conditionally inverted bit-plane through bit conditional inversion on a bit-plane and encoding the conditionally inverted bit-plane using a given coding system,
the non-differential coded bit-plane decoding unit performs decoding on the coded conditionally inverted bit-plane until obtaining a conditionally inverted bit-plane and outputs a decoding result as intermediate data to the intermediate data storage unit, and
the bit-plane macroblock layer decoding unit performs bit conditional inversion on the intermediate data to become the conditionally inverted bit-plane stored in the intermediate data storage unit and outputs final data.

9.  The bit-plane decoding device according to claim 5, wherein
the non-differential coded bit-plane is a coded conditionally inverted bit-plane produced by conditional inversion encoding of producing a conditionally inverted bit-plane through bit conditional inversion on a bit-plane and encoding the conditionally inverted bit-plane using a given coding system,
the non-differential coded bit-plane decoding unit performs decoding on the coded conditionally inverted bit-plane until obtaining a conditionally inverted bit-plane and outputs a decoding result as intermediate data to the intermediate data storage unit, and
the bit-plane macroblock layer decoding unit performs bit conditional inversion on the intermediate data to become the conditionally inverted bit-plane stored in the intermediate data storage unit and outputs final data.

**10.** The bit-plane decoding device according to claim 6, wherein
the non-differential coded bit-plane is a coded conditionally inverted bit-plane produced by conditional inversion encoding of producing a conditionally inverted bit-plane through bit conditional inversion on a bit-plane and encoding the conditionally inverted bit-plane using a given coding system,
the non-differential coded bit-plane decoding unit performs decoding on the coded conditionally inverted bit-plane until obtaining a conditionally inverted bit-plane and outputs a decoding result as intermediate data to the intermediate data storage unit, and
the bit-plane macroblock layer decoding unit performs bit conditional inversion on the intermediate data to become the conditionally inverted bit-plane stored in the intermediate data storage unit and outputs final data.

**11.** The bit-plane decoding device according to claim 7, wherein
the non-differential coded bit-plane is a coded conditionally inverted bit-plane produced by conditional inversion encoding using one of a plurality of different kinds of coding systems, and
the non-differential coded bit-plane decoding unit includes a plurality of non-differential coded bit-plane decoding units, each decoding a coded conditionally inverted bit-plane produced by conditional inversion encoding using a corresponding one of the plurality of coding systems to obtain a conditionally inverted bit-plane and outputting the conditionally inverted bit-plane as intermediate data to the intermediate data storage unit.

**12.** The bit-plane decoding device according to claim 8,
wherein
the non-differential coded bit-plane is a coded conditionally inverted bit-plane produced by conditional inversion encoding using one of a plurality of different kinds of coding systems, and
the non-differential coded bit-plane decoding unit includes a plurality of non-differential coded bit-plane decoding units, each decoding a coded conditionally inverted bit-plane produced by conditional inversion encoding using a corresponding one of the plurality of coding systems to obtain a conditionally inverted bit-plane and outputting the conditionally inverted bit-plane as intermediate data to the intermediate data storage unit.

**13.** The bit-plane decoding device according to claim 9, wherein
the non-differential coded bit-plane is a coded conditionally inverted bit-plane produced by conditional inversion encoding using one of a plurality of different kinds of coding systems, and
the non-differential coded bit-plane decoding unit includes a plurality of non-differential coded bit-plane decoding units, each decoding a coded conditionally inverted bit-plane produced by conditional inversion encoding using a corresponding one of the plurality of coding systems to obtain a conditionally inverted bit-plane and outputting the conditionally inverted bit-plane as intermediate data to the intermediate data storage unit.

**14.** The bit-plane decoding device according to claim 10, wherein
the non-differential coded bit-plane is a coded conditionally inverted bit-plane produced by conditional inversion encoding using one of a plurality of different kinds of coding systems, and
the non-differential coded bit-plane decoding unit includes a plurality of non-differential coded bit-plane decoding units, each decoding a coded conditionally inverted bit-plane produced by conditional inversion encoding using a corresponding one of the plurality of coding systems to obtain a conditionally inverted bit-plane and outputting the conditionally inverted bit-plane as intermediate data to the intermediate data storage unit.

**15.** A bit-plane decoding method to decode a coded bit-plane that is produced by encoding binary flag information of each macroblock in a picture partitioned into a plurality of macroblocks in a bit-plane and is contained in a picture header of compressed image data, the bit-plane decoding method comprising:

bit-plane picture layer decoding to perform processing in a picture layer; and
bit-plane macroblock layer decoding to perform processing in a macroblock layer,

wherein, for a coded residual value bit-plane produced by differential encoding of producing a residual value bit-plane based on a predicted value for a bit-plane and encoding the residual value bit-plane using a given coding system, the bit-plane picture layer decoding performs decoding until obtaining a residual value bit-plane, and
the bit-plane macroblock layer decoding performs differential reconstruction on a residual value of each macroblock contained in the residual value bit-plane produced by the bit-plane picture layer decoding and outputs final data.

**16.** The bit-plane decoding method according to claim 15,
wherein, for a non-differential coded bit-plane produced by non-differential encoding,

the bit-plane picture layer decoding decodes the non-differential coded bit-plane, and
the bit-plane macroblock layer decoding outputs a decoding result of the non-differential coded bit-plane for each macroblock as final data.

17. The bit-plane decoding method according to claim 16,
wherein
the non-differential coded bit-plane is a coded conditionally inverted bit-plane produced by conditional inversion encoding of producing a conditionally inverted bit-plane through bit conditional inversion on a bit-plane and encoding the conditionally inverted bit-plane using a given coding system,
the bit-plane picture layer decoding performs decoding on the coded conditionally inverted bit-plane until obtaining a conditionally inverted bit-plane, and
the bit-plane macroblock layer decoding performs bit conditional inversion on the conditionally inverted binary flag information of each macroblock contained in the conditionally inverted bit-plane and outputs final data.

Fig. 1

EP 1 890 495 A2

RESIDUAL
VALUE r

PREDICTION REFERENCE DATA

PREDICTION REFERENCE DATA
RETENTION UNIT

~108

~103

PREDICTED VALUE
CALCULATION UNIT

~106

PREDICTED VALUE p

DIFFERENTIAL
RECONSTRUCTION UNIT

~107

BIT-PLANE
DECODING RESULT b

BIT-PLANE MACROBLOCK LAYER DECODING UNIT

Fig. 2

START

DECODE RESIDUAL VALUE BIT-PLANE
(PICTURE LAYER) — S1100

STORE INTERMEDIATE DATA — S1102

IS THERE
BIT-PLANE
TO BE DECODED? — S1104

Yes

CALCULATE PREDICTED VALUE — S1106

DIFFERENTIAL RECONSTRUCTION — S1108

OUTPUT RESULT OF
DIFFERENTIAL RECONSTRUCTION — S1110

No

DECODE CODED ELEMENT
OF MACROBLOCK LAYER — S1120

FINAL
MACROBLOCK? — S1122

No

(MACORBLOCK LAYER)

Yes

END

Fig. 3

Fig. 4

EP 1 890 495 A2

Fig. 5

Fig. 6

EP 1 890 495 A2

EP 1 890 495 A2

PREDICTION REDERENCE DATA

PREDICTION REFERENCE DATA RETENTION UNIT — 224

PREDICTED VALUE CALAULATION UNIT — 221

PREDICTED VALUE p

INTERMEDIATE DATA

DIFFERENTIAL RECONSTRUCTION UNIT — 222

AUXILIARY DATA (DIFFERENTIAL ENCODING OR NON-DIFFERENTIAL ENCODING)

SELECTOR — 223

BIT-PLANE DECODING RESULT b

220

BIT-PLANE MACROBLOCK LAYER DECODING UNIT

Fig. 7

START

(PICTURE LAYER)

DECODE AUXILIAY DATA —— S1200

S1202

DIFFERENTIAL ENCODING? —— No

Yes

DECODE RESIDUAL VALUE BIT-PLANE —— S1203

DECODE BIT-PLANE —— S1204

STORE INTERMEDIATE DATA —— S1208

S1210

IS THERE BIT-PLANE TO BE DECODED? —— Yes

No

CALCULATE PREDICTED VALUE —— S1211

DIFFERENTIAL RECONSTRUCTION —— S1212

S1213

DIFFERENTIAL ENCODING? —— No

Yes

OUTPUT PESULT OF DIFFERENTIA RECONSTRUCTION —— S1214

OUTPUT INTERMEDIATE DATA AS IT IS —— S1215

DECODE CODED ELEMENT OF MACROBLOCK LAYER —— S1216

S1217

FINAL MACROBLOCK? —— No

Yes

(MACROBLOCK LAYER)

END

Fig. 8

Fig. 9

300

BITSTREAM

301

BIT-PLANE
PICTURE LAYER
DECODING UNIT

AUXILIARY
DATA

320

BIT-PLANE
MACROBLOCK LAYER
DECODING UNIT

330

MACROBLOCK
LAYER
DECODING UNIT

MACROBLOCK
DECODING RESULT m

INTERMEDIATED
DATA

INTERMEDIATED
DATA

BIT-PLANE
DECODING RESULT b

310

STORAGE UNIT

DATA PROCESSING DEVICE

Fig. 10

Fig. 11

EP 1 890 495 A2

320

323

PREDICTION REFERENCE DATA

PREDICTION REFERENCE
DATA RETENTION UNIT

PREDICTED VALUE
CALCULATION UNIT

324

AUXILIARY DATA
(INVERSION BIT)

AUXILIARY DATA
(DIFFERENTIAL ENCODING OR
NON-DIFFERENTIAL ENCODING)

PREDICTED VALUE P

SELECTOR

322

325

BIT-PLANE
DECODING RESULT b

INTERMEDIATE DATA

EXCLUSIVE-OR
OPERATION UNIT

BIT-PLANE MACROBLOCK LAYER DECODING UNIT

Fig. 12

Fig. 13

```
                                    ⌐301a
                        ⌐302a
BITSTREAM    ┌──────────────────────┐       AUXILIARY DATA
─────────────│BIT-PLANE AUXILIARY DATA│───→ (DIFFERENTIAL ENCODING OR
             │   DECODING UNIT        │      NON-DIFFERENTIAL ENCODING)
             └──────────────────────┘        (INVERSION BIT)
                        ⌐303a
             ┌──────────────────────┐
             │RESIDUAL VALUE BIT-PLANE│───→ INTERMEDIATE DATA
             │   DECODING UNIT        │     (RESIDUAL VALUE BIT-PLANE)
             └──────────────────────┘
                        ⌐304a
             ┌──────────────────────┐
             │FIRST NON-DIFFERENTIAL │
             │   CODED BIT-PLANE     │───→ INTERMEDIATE DATA
             │   DECODING UNIT       │     (INVERTED BIT-PLANE)
             └──────────────────────┘
                        ⌐305a
             ┌──────────────────────┐
             │SECOND NON-DIFFERENTIAL│
             │   CODED BIT-PLANE     │───→ INTERMEDIATE DATA
             │   DECODING UNIT       │     (INVERTED BIT-PLANE)
             └──────────────────────┘

BIT-PLANE PICTURE LAYER DECODING UNIT
```

Fig. 14

EP 1 890 495 A2

500

BITSTREAM

400

520

530

| BIT-PLANE PICTURE LAYER DECODING UNIT | AUXILIARY DATA | BIT-PLANE MACROBLOCK LAYER DECODING UNIT | MACROBLOCK LAYER DECODING UNIT |

INTERMEDIATE DATA

INTERMEDIATE DATA

BIT-PLANE DECODING RESULT b

STORAGE UNIT

510

VC-1 DEOCIDNG UNIT

Fig. 15

BITSTREAM

400

401 INVERT VALUE DECODING UNIT — INVERT VALUE

402 CODING MODE DECODING UNIT — CODING MODE

403 NORM-2/DIFF-2 DECODING UNIT

404 NORM-6/DIFF-6 DECODING UNIT

405 ROW-SKIP DECODING UNIT

406 COLUMN-SKIP DECODING UNIT

410 FIRST SELECTOR

411 XOR

413 SECOND SELECTOR

INTERMEDIATE DATE

BIT-PLANE PICTURE LAYER DECODING UNIT

Fig. 16

EP 1 890 495 A2

Fig. 17

520

524

LINE BUFFER

LEFT-SIDE DATA

UPPER-SIDE DATA

522

PREDICTED VALUE p

523

525

BIT-PLANE DECODING RESULT b

PREDIATED VALUE CALCULATION UNIT

DIFFERENTIAL RECONSTRUCTION UNIT

SELECTOR

INVERT VALUE

CODING MODE (IMODE)

BIT-PLANE MACROBLOCK LAYER DECODING UNIT

Fig. 18

Fig. 19

START

DECODE AUXILIARY DATA ⟵ S1500        (PICTURE LAYER)

⟵ S1502
RAW? — YES

No ⟵ S1503
DECODING UNTIL OBTAINING RESIDUAL VALUE BIT-PLANE
OR
DECODING UNTIL OBTAINING CONDITIONALLY INVERTED BIT-PLANE

⟵ S1504
DIFFERENTIAL ENCODING? — No

YES ⟵ S1505                              ⟵ S1506
OUTPUT RESIDUAL VALUE BIT-PLANE      OUTPUT XOR RESULT WITH INVERT VALUE

STORE INTERMEDIATE DATA ⟵ S1508

⟵ S1510
IS THERE BIT-PLANE TO BE DECODED? — Yes

No

⟵ S1512
CALCULATE PREDICTED VALUE

⟵ S1514
DIFFERENTIAL RECONSTRUCTION

⟵ S1516
DIFFERENTIAL ENCODING? — No ⟵ S1518
OUTPUT INTERMEDIATE DATA AS IT IS

Yes ⟵ S1520
OUTPUT RESULT OF DIFFERENTIAL RECONSTRUCTION

DECODE CODED ELEMENT OF MACROBLOCK LAYER ⟵ S1530

⟵ S1532
FINAL MACROBLOCK? — No

Yes

END                Fig. 20        (MACROBLOCK LAYER)

BITSTREAM

EP 1 890 495 A2

600

BIT-PLANE
PICTURE LAYER
DECODING UNIT

AUXILIARY
DATA

720

BIT-PLANE
MACROBLOCK LAYER
DECODING UNIT

730

MACROBLOCK LAYER
DECODING UNIT

MACROBLOCK
DECODING RESULT m

INTERMEDIATE
DATA

INTERMEDIATE
DATA

BIT-PLANE
DECODING RESULT b

710

STORAGE UNIT

VC-1 DECODING DEVICE

Fig. 21

BITSTREAM

Fig. 22

EP 1 890 495 A2

Fig. 23

START

**(PICTURE LAYER)**

DECODE AUXILIARY DATA — S1600

RAW? — S1602 — YES

No — S1603

DECODING UNTIL OBTAINING RESIDUAL VALUE BIT-PLANE
OR
DECODING UNTIL OBTAINING CONDITIONALLY INVERTED BIT-PLANE

STORE INTERMEDIATE DATA — S1608

IS THERE BIT-PLANE TO BE DECODED? — S1610

Yes

No

CALCULATE PREDICTED VALUE — S1612

DIFFERENTIAL ENCODING? — S1614 — No

Yes — S1616

OUTPUT INVERT VALUE — S1618

OUTPUT PREDICTED VALUE

PERFORM XOR OPERATION — S1620

OUTPUT — S1622

DECODE CODED ELEMENT OF MACROBLOCK LAYER — S1630

FINAL MACROBLOCK? — S1632 — No

Yes

**(MACROBLOCK LAYER)**

END

Fig. 24

RELATED ART

SEQUENCE

PICTURE

MACROBLOCLK

Fig. 25

# RELATED ART

VC-1 BITSTREAM

Fig. 26

# RELATED ART

BITSTREAM OF PICTURE LAYER INFORMATION (VC-1)

Fig. 27

# RELATED ART

Fig. 28

RELATED ART

1901 — PICTURE HEADER INFROMATION 1 — 1701

1902 — PICTURE HEADER INFROMATION 2

1910 — BIT-PLANE CODED MACROBLOCK INFORMATION 1

1911 — BIT-PLANE CODED MACROBLOCK INFORMATION 2

1920 — PICTURE HEADER INFORMATION N

PICTURE HEADER

Fig. 29

RELATED ART

Fig. 30

RELATED ART

(a)

(b)

(c)

(d)

(e)

Fig. 31

RELATED ART

(DECODING OF PICTURE LAYER AND BELOW)

PICTURE HEADER DECODING — S200

MACROBLOCK LAYER DECODING
(INCLUDING SLICE HEADER DECODING) — S300

Fig. 32

RELATED ART

PICTURE HEADER
DECODING — S200

SELECT CODED
ELEMENT — S201

FIXED LENGTH
CODING

CODING SYSTEM? — S202

BIT-PLANE CODING

VARIABLE LENGTH
CODING

S203
FIXED LENGTH CODE
DECODING

S204
VARIABLE LENGTH CODE
DECODING

S205
BIT-PLANE DEOCDING

FINAL HEADER
INFORMATION? — S206

No

Yes

END

Fig. 33

RELATED ART

```
┌─────────────────────┐
│     BIT-PLANE        │  ⟋ S205
│     DECODING         │
└─────────────────────┘
          │
          ▼
┌─────────────────────┐
│  DECODE BIT-PLANE   │  ⟋ S211
│  AUXILIARY DATA     │
└─────────────────────┘
          │
          ▼              ⟋ S212
         ╱╲                  No
        ╱  ╲
   ┌───< IS THERE  >──────────┐
        ╲DATA BIT?╱           │
         ╲  ╱                 │
          ╲╱                  │
          │                   │
       Yes│  ⟋ S213           │
          ▼                   │
┌─────────────────────┐       │
│   BI-PLANE DATA     │       │
│   BIT DECODING      │       │
└─────────────────────┘       │
          │                   │
          ▼◄──────────────────┘
      ╭─────────╮
      │   END   │
      ╰─────────╯
```

Fig. 34

RELATED ART

```
                                        ┌─────────────────────┐        ┌─ S213
                                        │  BIT-PLANE DATA     │ ⌇
                                        │  BIT DECODING       │
                                        └─────────────────────┘
                                                   │
                                                   ▼            ┌─ S221
                         No              ◇ DIFFERENTIAL ◇ ⌇
                    ◄──────────────────────  ENCODING ?
                    │                         ◇            ◇
                    │                                │
                 ┌─ S222                            Yes
                 ▼                                   ▼                    ┌ S223
         ┌─────────────────┐          ┌──────────────────────────┐ ⌇
         │   BIT-PLANE     │          │      BIT-PLANE           │
         │ NOEMAL DECODING │          │ DIFFERENTIAL DECODING    │
         └─────────────────┘          └──────────────────────────┘
                    │                              │
                    └──────────────────►──────────┘
                                                   ▼
                                        ╭─────────────────────╮
                                        │        END          │
                                        ╰─────────────────────╯
```

Fig. 35

RELATED ART

```
                    ┌──────────────┐
                    │    START     │
                    └──────┬───────┘
                           │
                           ▼
      ┌──────────────────────────────────────┐      S2710
      │     DECODE RESIDUAL BIT-PLANEE        │
      └──────────────────┬───────────────────┘
                         │
                         ▼
      ┌──────────────────────────────────────┐      S2720
      │     CALCULATE PREDICTOR BIT-PLANE     │
      └──────────────────┬───────────────────┘
                         │
                         ▼
      ┌──────────────────────────────────────┐      S2730
      │     RECONSTRUCT ORGINAL BIT-PLANE     │
      └──────────────────┬───────────────────┘
                         │
                         ▼
                 ┌───────────────┐
                 │     END       │
                 └───────────────┘
```

Fig. 36

# RELATED ART

INVERT VALUE

BITSTREAM

RESIDUAL VALUE
BIT-PLANE
DECODING UNIT
— 11

PICTURE BATCH BIT-PLANE
DIFFERENTIAL
RECONSTRUCTION UNIT
— 13

MACROBLOCK
LAYER
DECODING UNIT
— 16
→ MACROBLOCK
DECODING RESULT m

INTERMEDIATE DATA
(RESIDUAL VALUE r)

INTERMEDIATE DATA
(RESIDUAL VALUE r)

b

FINAL DATA
(b)

FINAL DATA
(b)

STORAGE UNIT

INTERMEDIATE DATA
(FINAL DATA)
— 12

Fig. 37

EP 1 890 495 A2

# RELATED ART

INVERT VALUE

13

14

PREDICTED VALUE
CALCULATION UNIT

FINAL DATA (b)

15

FINAL DATA (b)

INTERMEDIATE DATA
(RESIDUAL VALUE r)

DIFFERENTIAL
RECONSTRUCTION UNIT

PICTURE BATCH BIT-PLANE
DIFFERENTIAL RECONSTRUCTION UNIT

Fig. 38

RELATED ART

```
        ┌─────────────────────┐
        │        START        │
        └──────────┬──────────┘
                   │          ┌──────────────◄
                   │          │        S301
                   ▼          │
        ┌─────────────────────┐
        │ DECODE CODED ELEMENT │
        │  OF MACROBLOCK LAYER │
        └──────────┬──────────┘
                   │        S302
                   ▼
              ◇─────────◇
             ╱   FINAL    ╲      No
            ◇  MACROBLOCK?  ◇────────►
             ╲             ╱
              ◇─────────◇
                   │
                  Yes
                   ▼
        ┌─────────────────────┐
        │         END         │
        └─────────────────────┘
```

Fig. 39

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2005513883 A

**Non-patent literature cited in the description**

• *Proposed SMPTE Standard for Television: VC-1 Compressed Video Bitstream Format and Decoding Process,* 23 August 2005